# EUROPÄISCHE PATENTSCHRIFT

(11) **EP 1 378 820 B1**
(45) Veröffentlichungstag und Bekanntmachung des Hinweises auf die Patenterteilung: **10.08.2011**
(21) Anmeldenummer: 03090192.0
(22) Anmeldetag: 27.06.2003
(51) Int. Cl.: G06F 3/12, G06K 15/02

(54) **Anordnung zum Steuern des Druckens in einem Postbearbeitungsgerät**
System for controlling a printer in a mail processing system
Système de contrôle d'imprimante dans un système de traitement de courrier

(30) Priorität: 04.07.2002 DE 10230678
(43) Veröffentlichungstag der Anmeldung: 07.01.2004
(73) Patentinhaber: Francotyp-Postalia GmbH, 16547 Birkenwerder (DE)
(72) Erfinder: Jauert, Joachim, 13187 Berlin (DE); Schilling, Tilmann, 10249 Berlin (DE); Schlaaf, Torsten, 16341 Zepernick (DE)

(56) Entgegenhaltungen:
- EP-A2- 0 714 074
- US-A- 5 579 453

## Beschreibung

Die Erfindung betrifft eine Anordnung zum Steuern des Druckens in einem Postbearbeitungsgerät, gemäß des Oberbegriffs des Anspruchs 1. Die Erfindung kommt in Frankiermaschinen, Adressiermaschinen und anderen Postverarbeitungsgeräten zum Einsatz.

In der US 4.746.234 wurde bereits eine Frankiermaschine mit einem Thermotransferdrucker vorgeschlagen, der eine leichte Änderung der Druckbildinformationen erlaubt. Dabei werden semipermanente und variable Druckbildinformationen als Druckdaten elektronisch in einem Speicher gespeichert und zum Drucken in eine Thermotransferdruckvorrichtung ausgelesen. Diese Lösung wurde in der Frankiermaschine T1000 der Anmelderin eingesetzt und gestattete erstmalig ein Werbestempelbild per Knopfdruck zu wechseln.
Für die abteilungsweise Abrechnung der verbrauchten Postgebührenwerte mit der Frankiermaschine T1000 wurde ein Verfahren und Anordnung für einen internen Kostenstellendruck vorgeschlagen, wobei es mittels einer speziellen Drucksteuerung gelingt, ein elektronisch um 90° oder 270° gedrehtes Druckbild zu erzeugen (EP 580 274 B1, US 5.790.768).

Außerdem wird es mit der Maschine T1000 möglich, Visitenkarten, Gebühren- und Gerichtskostenstempelbilder auszudrucken, d.h. Druckbilder zu erzeugen, die sich in Aufbau und Inhalt wesentlich von einem Frankierstempelbild unterscheiden
Ein Frankierstempelbild umfaßt gewöhnlich ein Postwertzeichenbild, ein Poststempelbild mit dem Posteinlieferungsort und Datum sowie das vorgenannte Werbestempelbild und wird in der vorgenannten Reihenfolge beispielsweise durch die Frankiermaschine T1000 erzeugt, durch ein Drucken von Druckspalten in senkrechter Anordnung zur Frankierguttransportrichtung. Die gesamte Druckspalte wird von einem einzigen Thermotransferdruckkopf aufdruckt. Die Maschine kann dadurch einen maximalen Durchsatz an Frankiergut von 2200 Briefen/Stunde bei einer Druckauflösung 240 dot per 30 mm, d.h. 203 dpi erreichen, jedoch die Zuführung von Frankiergut per Hand begrenzt den praktisch erzielbaren Durchsatz an Frankiergut.
Aus der EP 578 042 B1 (US 5.608.636) ist ein Verfahren zum Steuern des spaltenweisen Drucks eines Postwertzeichens bekannt, bei dem codierte Bildinformationen vor dem jeweiligen Druckvorgang in Binärsignale zum Ansteuern von Druckelementen umgesetzt werden, wobei die umgesetzten veränderlichen und unveränderlichen Bilddaten erst während des Druckens zusammengesetzt werden. Dabei erfolgt das Dekodieren der variablen Druckdaten und Bereitstellen der Druckdaten für eine komplette Spalte in einem Register durch einen Mikroprozessor. Da in der Zeit zwischen zwei Druckspalten die Daten für die nächste Druckspalte bereitgestellt werden müssen, wird Rechenzeit des Mikroprozessors entsprechend dem Anteil der variablen Druckdaten, der Höhe des Frankiergutdurchsatzes und der Druckauflösung benötigt. Das erhöht die Bus-Last und begrenzt die Möglichkeit, ein Frankierstempelbild schneller auf ein Frankiergut aufzudrucken. Letzteres beinhaltet eine Mitteilung mit einer postalischen Information einschließlich der Postgebührendaten zur Beförderung des Briefes. Moderne Frankiermaschinen ermöglichen einen sogenannten Sicherheitsabdruck, d.h. einen Abdruck einer speziellen Markierung zusätzlich zu der vorgenannten Mitteilung. Beispielsweise wird aus der vorgenannten Mitteilung ein Message Authentication Code oder eine Signatur erzeugt und dann eine Zeichenkette oder ein Barcode als Markierung gebildet. Wenn ein Sicherheitsabdruck mit einer solchen Markierung gedruckt wird, ermöglicht das eine Nachprüfung der Echtheit des Sicherheitsabdruckes beispielsweise im Postamt oder privaten Carrier (US 5.953.426, US 6.041.704).
Die Entwicklung der postalischen Anforderungen für einen Sicherheitsabdruck hat in einigen Ländern zur Folge, dass die Menge der variablen Duckbilddaten sehr hoch ist, die zwischen zwei Abdrucken von unterschiedlichen Frankierstempelbildern geändert werden muss. So soll beispielsweise für Kanada ein Datamatrixcode von 48 x 48 Bildelementen für jeden einzelnen Frankierabdruck erzeugt und gedruckt werden.

Ein Inkjet-Druckkopf kann aus mehreren Modulen nach dem "Nonlnterlaced"-Prinzip zusammengesetzt sein, wenn die Abstände zwischen den Düsen zu groß sind und die Anzahl der Düsen eines Moduls nicht ausreichen, um mit einem Modul eine Druckbreite von 1 Zoll (= 25,4 mm) bei einer Auflösung von ca. 200 dpi zu drucken. Beispielsweise sind im Tintendruckkopf der Frankiermaschine JetMail® drei Module zueinander in Druckbildspaltenrichtung versetzt angeordnet, wobei die Module jeweils nur eine Düsenreihe mit 64 Düse haben und zur Druckspalte soweit schräg gestellt angeordnet sind, dass jede Düsenreihe einen spitzen Winkel zur Transportrichtung des Frankiergutes einnimmt. Somit drucken die einzelnen Düsen jedes Moduls nicht entlang einer Druckbildspalte sondern längs einer Diagonalen, welche die Spalten des Druckbildes schneidet. Infolge dessen summieren sich Pixelversatzfehler, wenn die Transportgeschwindigkeit nicht korrekt erfaßt wird. Trotz Erfassung der Bewegung des Frankiergutes in Transportrichtung mit einem hochwertigen Encoder ist es schwer, eine Linie in Druckbildspaltenrichtung gerade auszudrucken. Die einzelnen Module und deren Versatz zueinander weisen fertigungsbedingte Toleranzen auf. Unterhalb einer Größe, die eine Druckbildspalte von der nächstfolgenden beabstandet ist, wird ein Druckimpuls für jedes Modul unterschiedlich verzögert zugeführt. Ein Verfahren und eine Anordnung zum Toleranzausgleich wurden bereits im EP 921 008 A1 und im EP 921 009 A1 vorgeschlagen, wobei individuelle Druckkopfdaten in einem nichtflüchtigen Speicher des Druckkopfes gespeichert sind und bei der Druckimpulsverzögerung berücksichtigt werden. Geht der Pixelversatzfehler über die Größe hinaus, die eine Druckspalte von der nächstfolgenden beabstandet ist, müssen die binären Pixeldaten im Pixelspeicher geändert werden.
Eine aus US 5.707.158 und EP 762 334 B1 bekannte Lösung zur Druckbilderzeugung für die Jetmail ® beschreibt, wie die ein komplettes Druckbild beschreibenden Daten vor dem Drucken erzeugt und eingespeichert werden und geht von einer Steuerdatei zum feldweisen Erzeugen des Druckbildes in einem Pixelspeicher vor dem Drucken aus. Das Druckbild wird in Teilbilddateien der Steuerdatei definiert und ist in Pixeldateien als Muster gespeichert. Damit die Druckeinrichtung direkt auf die Pixeldaten zugreifen kann, werden binäre Pixeldaten nicht in der Reihenfolge entlang einer Druckbildspalte, sondern jeweils entlang einer Diagonalen in drei übereinanderliegenden Teilbereichen als geändertes Muster in einem Pixelspeicher gespeichert, um die beim Drucken aufgrund der Noninterlaced-Anordnung der Module verursachten Änderungen im Muster zu kompensieren. Die Lösung basiert auf kompletten unter Beteiligung einer Pixeldatenänderungseinheit geänderten Mustern an binären Pixeldaten, die im Pixelspeicher zwischengespeichert werden, wobei die Druckbilder vor dem Drucken so zusammengestellt werden, dass letztere durch eine Druckdatensteuerung unmittelbar aus dem Pixelspeicher in ein Schieberegister eingelesen, seriell zu einem Schieberegister im Druckkopf übertragen und in ein Latch übernommen werden können. Die Druckdatensteuerung ist zusammen mit anderen Baugruppen in einem ASIC realisiert (US 5.710.721, EP 1 154 382 A2).
Mit dieser Lösung können einige postalische Anforderungen nur deshalb erfüllt werden, da der Mikroprozessor beim Ändern der Bilddaten von variablen Bildelementen im Speicher durch die spezielle Pixeldatenänderungseinheit im ASIC auf dem JetMail CPU-Board unterstützt wird, welche die variablen Bildelemente zwischen aufeinanderfolgenden Frankierungen ändern kann, damit diese in Form von binären Pixeldaten in einen Pixelspeicher gespeichert vor dem Drucken vorliegen. Die für das Drucken erforderliche Anordnung der Bildpunkte (Pixel) im Pixelspeicher ist auf Grund der Schrägstellung der Druckmodule eines Druckkopfes für das Ändern von Bildelementen durch den Mikroprozessor ungünstig und würde einen hohen Rechenaufwand erfordern. Durch letzteren kann auch bei Unterstützung durch eine Pixelaufbereitungseinheit nur eine geringe Anzahl variabler Bildelemente zwischen den Abdrucken geändert werden. Aus der US 5.651.103 ist eine Vorrichtung und ein Verfahren zum spaltenweisen Druck eines Bildes in Echtzeit bekannt, bei der variable und feste Bilddatenelemente miteinander verbunden und in einem Puffer abgelegt werden, um dann zum Drucken einer Spalte benutzt zu werden. Die variablen und festen Bilddatenelemente liegen in einem nichtflüchtigen Speicher, wobei ein Teil der festen Bilddatenelemente komprimiert ist. Die Druckbilddaten werden für das Drucken einer jeden Druckspalte erst unmittelbar vor deren Drucken aus veränderlichen und unveränderlichen Bilddaten zusammengesetzt, d.h. die Bilddaten für einen Abdruck liegen nicht in binärer Form in einem Speicherbereich vor, sondern in einer mit dem im EP 578 042 B1 für die T1000 offenbarten Verfahren vergleichbaren Form. Durch eine Steuerung werden die variablen Bilddatenelemente im nichtflüchtigen Speicher identifiziert und Daten die mit den variablen Bilddatenelementen korrespondieren an eine weitere Steuerung übergeben, um die variablen und festen Bilddatenelemente herunterzuladen, miteinander zu verbinden und dann zu drucken. Die dafür vorgeschlagene Steuerung benötigt für jedes variable Bilddatenelement ein variables Adressregister. Die Anzahl der variablen Bildelementen ist damit durch die Anzahl der Adressregister begrenzt.

In einigen Frankiermaschinen kommt, heute ein postalischer ½ Zoll Inkjet-Druckkopf mit Bubble-jet-Technologie zum Einsatz, der in einer Kartusche beispielsweise vom Typ HP 51640 der Firma Hewlett Packard angeordnet und durch besondere Mittel gesichert ist (EP 1 132 868 A1). Im ½ Zoll Inkjet-Druckkopf sind 300 Düsen in zwei Düsenreihen angeordnet, die zur Frankierguttransportrichtung orthogonal und zueinander in Druckbildspaltenrichtung und in Frankierguttransportrichtung versetzt angeordnet sind ("Interlaced"-Prinzip).

Ein Farbdrucker mit einer Vielzahl an Druckköpfen ist aus der europäischen Patentanmeldung EP 714 074 A2 zwar bekannt, aber für ein Postverarbeitungsgerät ungeeignet.

In der europäischen Patentanmeldung EP 1 176 016 A2 mit dem Titel: Anordnung und Verfahren zur Datennachführung für Aufwärmzyklen von Tintenstrahldruckköpfen werden speziell gesicherte und für einen Frankierabdruck ansteuerbare Tintenstrahldruckköpfe näher erläutert. Um in einem Durchlauf des Frankiergutes durch eine Frankiermaschine einen kompletten Frankierabdruck mit einer Druckspaltenlänge von 1 Zoll = 25,4 mm und mit einer maximalen Auflösung bis zu 600 dpi in Druckbildspaltenrichtung auszudrucken, wurden zwei ½ Zoll Inkjet-Druckköpfe zueinander in Druckbildspaltenrichtung und in Frankierguttransportrichtung versetzt angeordnet. Das Druckbild wird aus Druckbildspalten in orthogonaler Anordnung zur Frankierguttransportrichtung erzeugt, wobei jeder der Druckköpfe einen Teil der Druckbildspalte druckt. Die Maschine kann dadurch einen hohen Durchsatz von Frankiergut erreichen (5500 Briefe je Stunde). Die Menge der Druckbilddaten, die zwischen zwei Abdrucken geändert werden muss, ist nicht nur sehr hoch, sondern muß auch in einer kürzeren Zeit bereitgestellt werden. Wenn die Speicherung der binären Druckbilddaten im Pixelspeicher für die Pixel aber in der speziellen Reihenfolge erfolgt, in der die Pixeldaten beim Drucken einer Spalte für die Ansteuerung der beiden postalischen ½ Zoll Inkjet-Druckköpfe mit Bubble-jet-Technologie benötigt werden, dann wird das Druckbild im Pixelspeicher als ein entsprechend umgeändertes Muster von binären Pixeldaten abgebildet. Dadurch wird das Ändern von Bildelementen durch den Mikroprozessor wieder kompliziert und erfordert einen hohen Rechenaufwand, der entweder nur mit einem teueren Mikroprozessor in der erforderlichen Zeit bereitgestellt werden kann oder aber der Durchsatz an Frankiergut ist entsprechend verringert.

Die Aufgabe der Erfindung besteht darin, ein kostengünstiges Verfahren zur Steuerung des Druckens auf ein bewegtes Postgut in einem Postbearbeitungsgerät mit einem hohen Durchsatz und hochauflösenden Druckköpfen zu schaffen, wobei der variable Druckbildanteil umfangreich sein kann und für unterschiedliche postalische Anforderungen flexibel ist. Bei einfacher Zwischenspeicherung und Adressenberechnung vor dem Ausdrucken der Pixeldaten soll der für die Steuerung eines kompletten Postbearbeitungssystems zuständige Mikroprozessor entlastet werden.

Die Aufgabe wird mit den Merkmalen der Anordnung nach dem Anspruch 1 gelöst.

Ausgehend davon, dass das Ändern von Bildelementen durch einen Mikroprozessor vereinfacht werden kann und einen geringeren Rechenaufwand erfordert, wenn das durch den jeweiligen Druckkopf zu druckende Druckbildteil im Pixelspeicher in Form von binären Pixeldaten so widergespiegelt wird, dass mit jedem Befehl des Mikroprozessors eine möglichst große Anzahl an binären Pixeldaten eines Bildelements geändert werden kann, wird eine Druckdatensteuerung mit einer Pixeldatenaufbereitung pro Druckkopf vorgeschlagen, wobei zwei Pixeldatenaufbereitungseinheiten durch eine spezielle Steuerung angesteuert werden, um wortweise binäre Pixeldaten aus dem Pixelspeicher in einen Zwischenspeicher zu übertragen und um bitweise binäre Pixeldaten auszuwählen, welche in ein Sammelregister der jeweiligen Pixeldatenaufbereitung eingeschrieben und anschließend gruppenweise in ein Schieberegister übernommen werden, so daß letztere in der speziellen Reihenfolge vom Schieberegister geliefert werden, in der die Pixeldaten beim Drucken einer Druckbildspalte mit mindestens einem Druckkopf benötigt werden.
Die zu einer Druckbildspalte gehörenden Pixeldaten sind im Pixelspeicher so angeordnet, dass variable Bildelemente durch den Mikroprozessor in der verfügbaren Zeit geändert werden können. Da die Pixeldaten für zwei komplette Druckbilder im Pixelspeicher abgelegt werden, können wechselweise und zeitlich parallel die Pixeldaten des einen Druckbildes für das Drucken einer Frankierung verwendet werden, während variable Pixeldaten des anderen noch zu druckenden Druckbildes durch den Mikroprozessor geändert werden. Mindestens ein Teil einer jeden Druckbildspalte des Druckbildes wird durch einen Druckkopf ausgedruckt, d.h. zwei Druckköpfe in orthogonaler Anordnung zur Transportrichtung drucken jeweils eine halbe Spaltenlänge einer Druckbildspalte. Beide Hälften derselben Druckbildspalte werden zeitversetzt gedruckt, da die Druckköpfe versetzt in Transportrichtung eines Poststückes angeordnet sind. Außerdem kann jeder der beiden Druckköpfe zwei Düsenreihen aufweisen. Jeder zweite Pixel auf der halben Spaltenlänge ist ein Pixel mit geraden Nummern einer ersten Druckbildspalte und wird durch Düsen einer zweiten Düsenreihe gedruckt. Die übrigen Pixel mit ungeraden Nummern der ersten Druckbildspalte werden von den Düsen einer ersten Düsenreihe auf dieser halben Spaltenlänge zeitlich versetzt gedruckt, da die erste Düsenreihe von der zweiten Düsenreihe um einen Abstand in Transportrichtung versetzt ist, wobei letzterer Versatz kleiner ist, als der o.g. Versatz der beiden Druckköpfe zueinander. Ein aus einer Anzahl von aufeinanderfolgenden Datenwörtern bestehender Datenstring von binären Pixeldaten aus dem Pixelspeicher ergibt ein identisches Abbild der Pixel mit geraden Nummern einer ersten Druckbildspalte und der Pixel mit ungeraden Nummern einer zweiten Druckbildspalte, die von einem Druckkopf mit zwei Düsenreihen gedruckt werden. Wird eine Vielzahl von solchen im Pixelspeicher gespeicherten Datenstrings in der Reihefolge spaltenweise angeordnet, ergibt ein sich somit ein identisches Abbild mindestens eines Teiles des durch einen Druckkopf ausgedruckten Druckbildes, das nun effizient änderbar ist. Durch den Mikroprozessor werden unter Verwendung von Befehlen und Daten aus einem Festwertspeicher binäre Pixeldaten generiert und wortweise im Pixelspeicher gespeichert. Da diese Anordnung der Pixeldaten jedoch noch nicht der Reihenfolge entspricht, in der die Pixeldaten für die Druckkopfansteuerung benötigt werden, wurde eine Druckdatensteuerung entwickelt, die dazu beiträgt, dass die Düsen der Druckköpfe zum Drucken einer Druckbildspalte in einer vorgegebenen Sequenz und entsprechend den Werten der binären Pixeldaten angesteuert werden. Die für das Drucken mindestens einer Druckbildspalte benötigten Pixeldaten werden per direktem Speicherzugriff (halb)wortweise für jeden Druckkopf in je einen Zwischenspeicher der Druckdatensteuerung geladen und dort zwischengespeichert. Mit Hilfe eines Adressengenerators in der Druckdatensteuerung werden die den einzelnen Pixeln entsprechenden Bits aus dem vorgenannten Zwischenspeicher in der von den Druckköpfen benötigten Reihenfolge in je einen Sammelspeicher für die binären Pixeldaten des jeweiligen Druckkopfes übertragen und dann gruppenweise in ein Schieberegister mit der Bit-Länge einer der Düsengruppen geladen und anschließend seriell zu den Treibereinheiten übertragen, welche zur Ansteuerung der Druckköpfe vorgesehen sind.
Für jeden der Druckköpfe sind zwei Zwischenspeicher vorgesehen, wobei abwechselnd je einer der Zwischenspeicher per direktem Speicherzugriff geladen wird, während der andere ausgelesen wird, um die binären Pixeldaten zu den Treibereinheiten zu übertragen. Das Laden und Auslesen der Zwischenspeicher, die vorzugsweise als Dual-Port-RAMs ausgeführt sind, erfolgt vorzugsweise über getrennte Ports der Zwischenspeicher. Nachdem der Mikroprozessor den direktem Speicherzugriff initialisiert und das Drucken eines Druckbildes gestartet hat, wird durch einen Encoder, der eine der Transportgeschwindigkeit des Frankierguts entsprechende Impulsrate liefert, das Laden der Zwischenspeicher und das Drucken der Pixeldaten des Datenstrings ausgelöst. Die Pixeldaten sind so im Pixelspeicher angeordnet, dass mit einem Encodertakt der direkte Speicherzugriff eine bestimmte Anzahl von Zyklen ausführen kann, um damit die Pixeldaten für den nächsten Datenstring in die entsprechenden Zwischenspeicher zu laden. Mit jedem Encodertakt wird in der Druckdatensteuerung ein Datenstringzähler inkrementiert. Wenn ein vorgegebener Wert erreicht ist, wird das Drucken beendet. Der Vorteil der Lösung besteht darin, dass indem die Art der Anordnung der Pixeldaten im Pixelspeicher eine effiziente Bearbeitung der variablen Bildelemente durch den Mikroprozessor ermöglicht und der Mikroprozessor von der Druckersteuerung entlastet wird, ein Ändern der variablen Bilddaten im Pixelspeicher während einer Frankierung oder zwischen aufeinanderfolgenden Frankierungen durch einen kostengünstigen Mikroprozessor realisiert werden kann. Dabei ist ein hohes Maß an Flexibilität bezüglich des Umfangs und der Ausführung der variablen Druckbildelemente gegeben.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1a,: Blockschaltbild für die Druckdatenbereitstellung in der Frankiermaschine JetMail ® ,
- Figur 1b,: Vereinfachtes Druckbild einer Frankiermaschine,
- Figur 1c,: Reihe binärer Pixeldaten,
- Figur 2,: Blockschaltbild für die Pixeldatenaufbereitung durch eine Druckdatensteuerung,
- Figur 3,: Ausschnitt aus der Schaltungsanordnung nach Fig.2 mit einer Pixeldatenaufbereitungseinheit für den zweiten Druckkopf,
- Figur 4,: Pixeldatenaufbereitungseinheit für den zweiten Druckkopf,
- Figur 5a,: Druckbild für eine Frankiermaschine mit zwei Druckköpfen,
- Figur 5b,: Anordnung der zwei Druckköpfe zum Drucken des Druckbildes,
- Figur 6,: Darstellung von Pixeldaten für zwei Druckhalbbilder im Pixelspeicher,
- Figur 7,: Darstellung von Pixeldaten für vier Druckhalbbilder im Pixelspeicher,
- Figur 8,: Anordnung der zwei Druckköpfe zum Drucken des Druckbildes mit einer verdoppelten Auflösung,
- Figur 9a,: Darstellung von Pixeldaten für vier Druckhalbbilder im Pixelspeicher, in einer bevorzugten Anordnung,
- Figur 9b,: Darstellung zum spaltenweisen Druck von Pixeln,
- Figur 10a,: Darstellung der in einem Pixelspeicher gespeicherten binären Pixeldaten von einem Bildelement,
- Figur 10b,: Darstellung der binären Pixeldaten eines Bildelementes, das vorteilhaft aufgeteilt im Pixelspeicher gespeichert ist,
- Figur 10c,: Darstellung der in bekannter Weise gespeicherten binären Pixeldaten eines Bildelementes im Pixelspeicher,
- Figur 11,: Flußplan zur Ablaufsteuerung der Druckersteuerung,
- Figur 12,: Flußplan zur DMA-Steuerung,
- Figur 13,: Flußplan zur Adressengenerierung,
- Figur 14,: Tabelle zur Adressengenerierung,
- Figur 15,: Flußplan der Druckroutine.

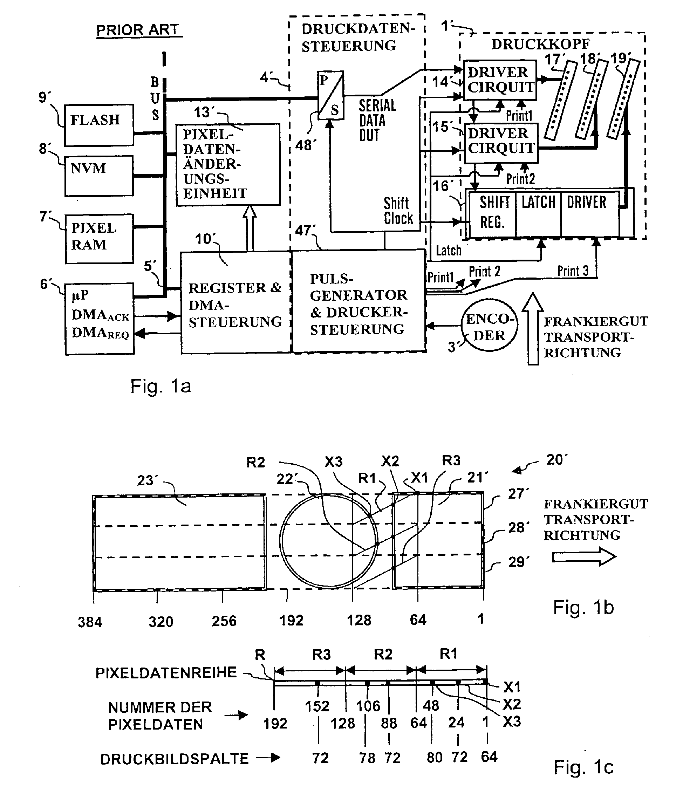

Die Figur 1a zeigt das Blockschaltbild für die Druckdatenbereitstellung in der Frankiermaschine JetMail ® . Über einen BUS 5' sind mindestens ein Mikroprozessor 6', ein Pixelspeicher RAM 7', ein nichtflüchtiger Speicher NVM 8' und ein Festwertspeicher FLASH 9' mit einer Druckdatensteuerung 4' adress-, daten- und steuerungsmäßig verbunden. Die Pixeldaten werden in der Reihenfolge, wie sie vom Druckkopf für das Drucken benötigt werden, im Pixelspeicher 7'gespeichert. Eine Pixeldatenänderungseinheit 13' dient zum Ändern der Pixeldaten variabler Bildelemente im Pixelspeicher 7' und entlastet den Mikroprozessor. Das Drucken mit dem speziellen Druckkopf 1' erfordert eine Vornahme von speziellen Änderungen in der Reihenfolge bzw. im Muster der binären Pixeldaten im Pixelspeicher. Der Druckkopf 1' weist drei schräggestellte Tintendruckmodule in "Non-interlaced"-Anordnung auf, die jeweils nur eine Druckreihe aufweisen und bei Ausgabe eines Druckimpulses eine schräge Tintenspur erzeugen. Die binären Pixeldaten werden für drei Tintendruckmodule aus dem Pixelspeicher 7' entnommen, durch einen Parallel/Serien-Wandler 48' in serielle Daten umgesetzt und zum Druckkopf übertragen. Für den Parallel/Serien-Wandler 48' kommt ein übliches Schieberegister zum Einsatz. In der EP 716 398 B1 (US 5.710.721) wird die als anwenderspezifische Schaltung (ASIC) ausgeführte Druckdatensteuerung 4' näher erläutert.
Die Elektronik der Tintendruckmodule wird vereinfacht dargestellt, weil der Aufbau aller Treiberschaltungen für die drei Tintendruckmodule 17', 18' und 19' gleich ist. Die Treiberschaltungen - im Blockschaltbild der Fig.1a als Driver Cirquit 14', 15' und 16' bezeichnet - setzen serielle Eingangsdaten in parallele binäre Pixeldaten für jeden der Tintendruckmodule 17', 18' und 19' um, wobei die parallelen binäre Pixeldaten in je einem Zwischenspeicher (Latch) gespeichert werden. Der Aufbau der Treiberschaltung 16' ist genauer dargestellt worden. Die seriellen Druckdaten werden durch einen Schiebetakt (Shiftclock) nacheinander in Schieberegister der Treiberschaltungen 14', 15' und 16' geschoben und anschließend durch einen Latch-Befehl in Latches übertragen. Die ausgangsseitigen Treibertranssitoren werden durch ein Drucksignale Print1, Print2, Print3 in Abhängigkeit der Latch-lnhalte für eine bestimmte Zeit durchgeschaltet, um die Piezoaktoren zu aktivieren, die dadurch Tintentropfen ausstoßen. In der US 5.758.402 bzw. EP 713 776 B1 ist detailliert ausgeführt, das praktisch jede der Treiberschaltungen 14', 15' und 16' je zwei Schaltkreismodule hat, wobei je ein Schaltkreismodul mit den vorgenannten Treiberschaltungen auf plattenförmigen Trägern beidseitig zum Tintendruckmodul angeordnet ist. An den Parallelausgängen von zwei 32-bit-Schieberegistern sind jeweils 32-bit-Latches und ausgangsseitig 32 Treibertranssitoren zur Ansteuerung von 32 Piezoaktoren angeschlossen.

Die Figur 1b zeigt ein vereinfachtes Druckbild 20', mit einem Frankierstempelbild 21', Poststempelbild 22' und Werbestempelbild 23' sowie mit einer eingezeichneten Lage der Druckreihen von den drei Modulen eines Druckkopfes. Eine vergleichbare Anordnung besteht in der Frankiermaschine JetMail ® , die seit dem Jahre 1997 eingesetzt wird. Für die drei Module ist das Druckbild 20' in drei parallel liegende Bereiche 27', 28' und 29' aufgeteilt, wobei das Modul 17' nur den Bereich 27', wobei das Modul 18' nur den Bereich 28' und wobei das Modul 19' nur den Bereich 29' entgegen der Frankierguttransportrichtung bedruckt. Jedes der Stempelbilder ist nur zur besseren Darstellung auf einen äußeren Rahmen reduziert und mit einer Doppellinie gezeichnet worden, damit die entsprechenden auf dem Rahmen angeordneten Pixeln sichtbar werden. Nur zur qualitativen Erläuterung wird von einer Anzahl von Druckbildspalten ausgegangen, welche für einen spaltenweisen Druck bedeutungsvoll sind, obwohl natürlich mit der oben erläuterten Anordnung der drei Module kein spaltenweiser Druck möglich ist. Jeder der drei Bereiche 27', 28' und 29' wird also durch orthogonal zur Frankierguttransportrichtung angeordnete Druckbildspalten geschnitten. Das Modul 17' bedruckt im Bereich 27' das Frankiergut entlang einer Reihe R1, das Modul 18' im Bereich 28' entlang einer Reihe R2 und das Modul 19' im Bereich 29' entlang einer Reihe R3, welche parallel zueinander liegen. Eine erste Düse der ersten Düsenreihe R1 fluchtet mit einer ersten Düse der zweiten Düsenreihe R2 und mit einer ersten Düse der dritten Düsenreihe R3. Es ist ersichtlich, dass ein erstes Pixel X1 der in der Druckbildspalte 64 liegt und durch eine erste Düse in der Düsenreihe R1 gedruckt wird. Weitere Düsen in der Düsenreihe R1 drucken einen zweiten und dritten Pixel X2 und X3 zum selben Zeitpunkt, wobei letztere beispielsweise in der zweiundsiebzigsten und achzigsten Druckbildspalte liegen. Die übrigen Düsen bis zur vierundsechzigsten Düse der Düsenreihe R1 werden nicht angesteuert, da kein weiteres Pixel des vereinfachten Druckbildes auf einem unter dieser Reihe transportierten Poststück (nicht gezeigt) zu drucken ist. Die vierundsechzigste Düse in der Düsenreihe R1 würde in der einhundertachtundzwanzigsten Druckbildspalte drucken, wenn ein Pixel dafür im Druckbild entsprechend vorgesehen wäre. Die anderen Düsenreihen R2 und R3 sind von der ersten Düsenreihe R1 beabstandet. Mit dem zweiten Pixel X2 in der Düsenreihe R1 fluchtet in der Druckbildspalte 72 jeweils ein Pixel der beiden anderen Düsenreihen R2 und R3, wobei jedes dieser Pixel in einem separaten Bereich 27', 28' und 29' liegt.

Die Figur 1c verdeutlicht eine Reihe binärer Pixeldaten, wobei die Reihe R vereinfacht aus aneinander gereihten binären Pixeldaten der Düsenreihen R1, R2 und R3 besteht. Im Pixelspeicher einer Frankiermaschine sind binäre Daten (Einsen und Nullen) gespeichert. Nur zur Verdeulichung sind die zu druckenden Bit-Werte (Eins) als Punkt auf der Reihe dargestellt. Auf eine Darstellung der nicht zu druckenden Bit-Werten (Null) wurde der Übersichtlichkeit halber verzichtet. In dieser Reihe R sind die binären Pixeldaten von rechts nach links nummeriert von 1 bis 192. Im dargestellten Beispiel würden die binären Pixeldaten für ein erstes Pixel X1 mit der Nummer 1 ein Drucken in die Druckbildspalte 64, für die Pixel mit den Nummern 24, 88 und 152 in die Druckbildspalte 72, für das Pixel mit der Nummer 48 in die Druckbildspalte 80 und für das Pixel mit der Nummer 106 in die Druckbildspalte 78 bewirken. In einer vergleichbaren Reihenfolge liegen eine Vielzahl solcher Reihen im Pixelspeicher einer Frankiermaschine vom Typ JetMail® gespeichert vor. So haben binäre Pixeldaten, welche im Pixelspeicher adressenmäßig weit entfernt voneinander gespeichert worden sind, ein Druckbild zur Folge, in welchem die Pixel benachbart sind und auf einer Druckbildspalte liegen. Wie leicht vorstellbar ist, existiert im Pixelspeicher ein Muster, was nicht ohne weiteres als eine transformierte Widerspiegelung des Druckbildes wiederzuerkennen ist. Das erschwert die Fehlersuche bei fehlerhaft ausgedruckten Druckbildern und reduziert die Möglichkeit Änderungen im Druckbild schnell und einfach vorzunehmen. Dieser Nachteil wird ebenfalls durch die erfindungsgemäße Lösung beseitigt.

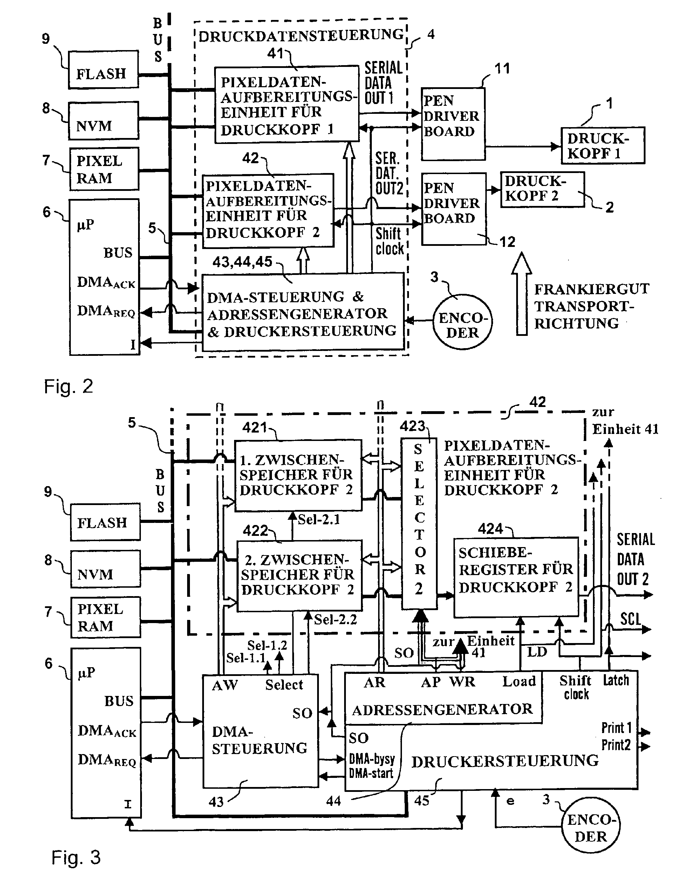

Die Figur 2 zeigt das Blockschaltbild der bevorzugten Schaltungsanordnung für die Pixeldatenaufbereitung durch eine Druckdatensteuerung. Ein erster und ein zweiter Druckkopf 1 und 2 sind jeweils über eine Treibereinheit (Pen-Driver-Board) 11 und 12 mit einer Druckdatensteuerung 4 verbunden, welche bei einem direkten Speicherzugriff eingangsseitig 16 bit parallel anliegende binäre Druckbilddaten von einem BUS 5 annimmt und ausgangsseitig seriell binäre Druckbilddaten an die Treibereinheiten 11 und 12 abgibt. Über den BUS 5 sind mindestens ein Mikroprozessor 6, ein Pixelspeicher 7, ein nichtflüchtiger Speicher 8 und ein Festwertspeicher 9 adress-,daten- und steuerungsmäßig verbunden. Ein Encoder 3 ist mit der Druckdatensteuerung 4 verbunden, um das Zwischenspeichern der binären Pixeldaten und das Drucken der Druckbildspalten auszulösen, wobei jeder Druckkopf mit einer Taktfrequenz von max. 6,5 KHz betrieben wird. Ein für einen Frankierabdruck postalisch gesicherter und über eine zugehörige Teibereinheit (Pen Driver Board) ansteuerbarer Tintenstrahldruckkopf, der in einer Tintenkartusche vom Typ HP 51645A der Firma Hewlett Packard angeordnet ist, wird in der europäischen Patentanmeldung EP 1 176 016 A2 näher erläutert, welche den Titel trägt: Anordnung und Verfahren zur Datennachführung für Aufwärmzyklen von Tintenstrahldruckköpfen. Die Druckdatensteuerung 4 weist eine erste und zweite Pixeldatenaufbereitungseinheit 41 und 42 und die zugehörigen Steuerungen 43, 44 und 45 auf. Es ist vorgesehen, dass eine Druckersteuerung 45 mit einer DMA-Steuerung 43 und mit einem Adressengenerator 44 sowie dass der Adressengenerator 44 mit der Pixeldatenaufbereitungseinheit 41, 42 steuerungsmäßig verbunden ist. Die Druckersteuerung 45 ist über den BUS 5 und über eine Steuerleitung für ein Interruptsignal l direkt mit dem Mikroprozessor 6 verbunden. Die DMA-Steuerung 43 ist über eine Steuerleitung für DMA-Steuersignale DMA_{ACK}, DMA_{REQ} mit dem Mikroprozessor 6 verbunden.

Die Figur 3 zeigt einen Ausschnitt aus der Schaltungsanordnung nach Figur 2 mit einer Pixeldatenaufbereitungseinheit 42 für den zweiten Druckkopf, mit einer DMA-Steuerung 43 für einen direkten Speicherzugriff (DMA) sowie mit den in einem Schaltungsblock angeordneten Schaltungen eines Adressengenerators 44 und einer Druckersteuerung 45. Der Encoder 3 ist mit der Druckersteuerung 45 verbunden. Die Letztere ist mit der DMA-Steuerung 43 direkt über Steuerleitungen für erste DMA-Steuersignale (DMA-Start und DMA-busy) verbunden, wobei der DMA-Steuerung 43 von der Druckersteuerung 45 das DMA-Startsignal zugeführt wird und wobei die DMA-Steuerung 43 das DMA-busy-Signal mit dem Wert 'Null' an die Druckersteuerung 45 abgibt, um zu signalisieren, daß der direkte Speicherzugriff erfolgt und die DMA-Zyklen beendet sind. Die Druckersteuerung 45 ist mit dem Mikroprozessor 6 über den BUS 5 und über eine Steuerleitung für ein Interruptsignal 1, mit dem Adressengenerator 44 über eine Steuerleitung zur Zuführung eines Adressengeneratorstartsignals sowie mit der DMA-Steuerung 43 über eine Steuerleitung für ein Umschaltsignal SO verbunden. Über den Bus 5 sind mindestens der Mikroprozessor 6, der Pixelspeicher 7, der nichtflüchtige Speicher 8 und der Festwertspeicher 9 adress-, daten- und steuerungsmäßig verbunden. Es ist vorgesehen, dass die Druckersteuerung 45 Mittel zur Generierung und Ausgabe eines Umschaltsignals SO aufweist, um damit die Pixeldatenaufbereitungseinheit 42 anzusteuern, wodurch die Pixeldaten von dem jeweils ersten oder dem jeweils zweiten der beiden Zwischenspeicher 412 und 422 für eine Übertragung zu der Treibereinheit 12 ausgewählt werden. Der Treibereinheit 12 können dadurch die binären Pixeldaten eines weiteren Datenstrings gruppenweise zugeführt werden. Der DMA-Steuerung 43 wird von der Druckersteuerung 45 das Umschaltsignal SO zugeführt. Die DMA-Steuerung 43 weist Mittel zur Generierung und Ausgabe von Auswahlsignalen Sel_2.1, Sel_2.2 in Abhängigkeit vom Schaltzustand des Umschaltsignals SO auf, um die binären Pixeldaten in den jeweils ersten oder den jeweils zweiten der beiden Zwischenspeicher 421 oder 422 zwischenzuspeichern, wobei bei einer Übertragung von Pixeldaten aus dem jeweils einen der beiden Zwischenspeicher zu der Treibereinheit 12, die jeweils anderen Zwischenspeicher zum Zwischenspeichern eines Datenstrings nacheinander durch die Auswahlsignale ausgewählt werden. Die binären Pixeldaten werden der Pixeldatenaufbereitungseinheit 42 datenstringweise zur Verfügung gestellt.
Die Pixeldaten einer Druckbildspalte belegen je ½ Zoll-Druckkopf nur den halben Platz, d.h. 10x32 Bit im Pixelspeicher 7. Vorzugsweise verfügen der Mikroprozessor 6 und der Pixelspeicher 7 über einen 32 Bit breiten Datenbus, um wortweise auf die Pixeldaten zugreifen zu können. Ein interner DMA-Controller des Mikroprozessors 6 erlaubt auch die Adressierung von 16 Bit breiten Datenworten. Die zweite Pixeldatenaufbereitungseinheit 42 für den zweiten Druckkopf umfasst einen ersten und zweiten Zwischenspeicher 421 und 422, welche jeweils eingangsseitig zwar am Bus 5 jedoch dort nur an die niederwertigen 16 Bit des Datenbusses angeschlossen sind. Das Zwischenspeichern eines Datenstrings erfordert folglich, daß nacheinander in zwei Zwischenspeichern ein Zwischenspeichern von je 20 * 16 Bit Datenworten vorgenommen wird, wobei die Zwischenspeicher durch die Auswahlsignale ausgewählt werden.
Unter den Begriffen wie "Datenwort" bzw. "wortweise" sollen in den nachfolgenden Ausfühungsbeispielen immer ein 16 Bit breites Datenwort verstanden werden, wenn nicht ausdrucklich die Datenwortbreite zusätzlich angegegeben wird.
Es ist vorgesehen, dass die DMA-Steuerung 43 mit dem Mikroprozessor 6 und mit den Zwischenspeichern 421 und 422 steuerungsmäßig verbunden ist, dass die DMA-Steuerung 43 Mittel zur Generierung und Ausgabe von Adressenschreibsignalen AW aufweist, die bei einem DMA-Zugriff auf die im Pixelspeicher 7 gespeicherten binären Pixeldaten deren Einschreiben in die Zwischenspeicher 421, 422 der Pixeldatenaufbereitungseinheit 42 gestatten. Von der DMA-Steuerung 43 wird zur wortweisen Adressierung ein 5 Bit breites Adressenschreibsignal AW geliefert. Letzteres liegt jeweils an einem separaten Adresseneingang des ersten und zweiten Zwischenspeichers 421 und 422 für Pixeldaten für den zweiten Druckkopf an. Von der DMA-Steuerung 43 wird ein erstes Auswahlsignal Sel_2.1 für Pixeldaten für den zweiten Druckkopf geliefert und liegt an einem separaten Steuereingang des ersten Zwischenspeichers 421 für Pixeldaten für den zweiten Druckkopf an. Von der DMA-Steuerung 43 wird ein zweites Auswahlsignal Sel_2.2 für Pixeldaten für den zweiten Druckkopf geliefert und liegt an einem separaten Steuereingang des zweiten Zwischenspeichers 422 für Pixeldaten für den zweiten Druckkopf an.
Es ist vorgesehen, dass der Adressengenerator 44 Mittel zur Generierung und Ausgabe von Adressensignalen AR, AP und von Steuersignalen WR, LD aufweist, und wobei die Adressensignale AR, AP und Steuersignale WR, LD der Pixeldatenaufbereitungseinheit 41, 42 zur Auswahl der zwischengespeicherten binären Pixeldaten und deren Gruppierung in einer vorbestimmten Reihenfolge zugeführt werden.

Jede Pixeldatenaufbereitungseinheit weist zwei Zwischenspeicher, einen Selektor zur Auswahl der binären Pixeldaten und ein Schieberegister zur Parallel/Serienwandlung der in einer neuen Reihenfolge bereitgestellten binären Pixeldaten auf. Vom Adressengenerator 44 werden die generierten Adressenlesesignale AR den Zwischenspeichern und dem Selektor der Pixeldatenaufbereitungseinheit zugeführt, wobei die Primitiv-Adressensignale AP und das Schreibsteuersignal WR dem Selektor und ein Ladesignal LD dem Schieberegister zugeführt werden. Außerdem werden von der Druckersteuerung 45 dem Selektor 423 das Umschaltsignal SO zugeführt. Vom Adressengenerator 44 wird ein Adressenlesesignal AR zur Auswahl des Datenwortes mit den Pixeldaten geliefert, die für den zweiten Druckkopf bestimmt sind. Zur wortweisen Adressierung liegen die höherwertigen Bits des Adressenlesesignals AR an einem separaten Adresseneingang des ersten und zweiten Zwischenspeichers 421 und 422 an. Die vier niederwertigen Bits des Adressenlesesignals AR liegen an einem Adresseneingang eines zweiten Selektors 423 an und erlauben eine Adressierung innerhalb des 16 Bit breiten Datenwortes. Die parallelen Datenausgänge des ersten und zweiten Zwischenspeichers 421 und 422 für Pixeldaten für den zweiten Druckkopf liegen an einem ersten und zweiten Eingang des Selektors 423 an, der vom Adressengenerator 44 gesteuert an seinem Ausgang ein 14 Bit paralleles Datensignal an den parallelen Dateneingang eines Schieberegisters 424 für Pixeldaten für den zweiten Druckkopf liefert. Das Schieberegister 424 wird durch ein Schiebetaktsignal SCL der Druckersteuerung 45 gesteuert und gibt ein serielles Datenausgangssignal SERIAL DATA OUT 2 aus. Der Adressengenerator 44 gibt zur Steuerung des Selektors 423 außerdem eine primitive Adresse AP und ein Schreibsignal WR aus. Der Adressengenerator 44 gibt ein Ladesignal LD an das Schieberegister 424 aus. Die Druckersteuerung 45 gibt Signale Latch und Print2 für die Steuerung des Pen Driver Boards 12 aus und ist über mindestens zwei Steuerleitungen für die Steuersignale DMA-start und DMA-busy mit der DMA-Steuerung 43 verbunden. Die Druckersteuerung 45 ist über eine Steuerleitung für die Ausgabe des Signals SO mit einem entsprechenden Steuereingang der DMA-Steuerung 43 und mit der Pixeldatenaufbereitungseinheit 42 verbunden.

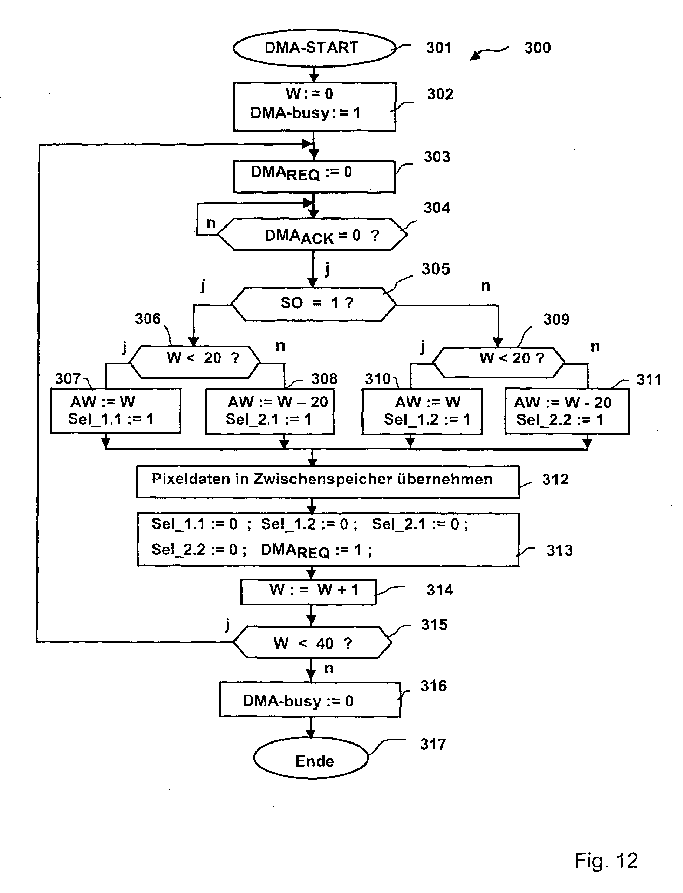

Die Druckersteuerung 45 hat Auswertemittel zur Auswertung der via Bus 5 übermittelten Adress-und Steuerungssignale, die hinsichtlich des Vorkommens eines Druckbefehls ausgewertet werden und steht mit der DMA-Steuerung 43 über mindestens eine Steuerleitung in Verbindung.
Ausgelöst durch einen Druckbefehl wird von der Druckersteuerung 45 ein erstes Steuersignal DMA-start an die DMA-Steuerung 43 abgegeben. Daraufhin wird von der DMA-Steuerung 43 ein Anforderungssignal DMA_{REQ} erzeugt und zum Mikroprozessor 6 gesendet. Der Mikroprozessor verfügt über einen internen DMA-controller (nicht gezeigt), der bei einem direkten Speicherzugriff eine bestimmte Adresse an den Pixelspeicher (RAM) 7 anlegt, wodurch ein wortweises Übermitteln von binären Pixeldaten via Bus 5 an die Zwischenspeicher ermöglicht wird. Von der DMA-Steuerung 43 wird dazu ein Adressenschreibsignal AW an die Zwischenspeicher geliefert. Der Mikroprozessor 6 kann via DMA aus dem Pixelspeicher 7 beispielsweise ein 16 Bit breites Datenwort mit Pixeldaten auslesen und zur Druckdatensteuerungseinheit übermitteln. Der Mikroprozessor 6 sendet ein Bestätigungssignal DMA_{ACK} an die DMA-Steuerung 43, um die Generierung des Adressenschreibsignals AW in der DMA-Steuerung 43 mit dem DMA-Zyklus des Mikroprozessors 6 zu synchronisieren. Anhand der Figur 12 wird später der Ablauf in der DMA-Steuerung 43 noch genauer erläutert.
Je DMA-Zyklus gelangt ein 16 Bit breites Datenwort mit binären Pixeldaten in einen Zwischenspeicher. Jeder der vier Zwischenspeicher kann nach je 20 DMA-Zyklen insgesamt 320 Bit zur weiteren Datenaufbereitung bereitstellen. Zur Erzielung einer Druckauflösung von 600 dpi werden je zwei der vier Zwischenspeicher für ein Einspeichern während der DMA-Zyklen benutzt. Beim wortweisen Einspeichern und Auslesen von Pixeldaten für den zweiten Druckkopf wechseln sich die beiden Zwischenspeicher 421 und 422 ab. Von der DMA-Steuerung 43 werden deshalb während der DMA-Zyklen ein erstes und ein zweites Auswahlsignal Sel_2.1 oder Sel_2.2 wechselweise zum wortweisen Einspeichern von Pixeldaten für den zweiten Druckkopf geliefert. Von der DMA-Steuerung 43 wird beispielsweise zum wechselweisen und wortweisen Einspeichern von Pixeldaten für den zweiten Druckkopf ein erstes Auswahlsignal Sel_2.1 und ein Adressenschreibsignal AW geliefert. Die für jede Druckbildspalte gewünschte Pixelanzahl erfordert, insgesamt 40 Datenworte a 16 Bit in zwei von vier Zwischenspeichern zwischenzuspeichern. In der DMA-Steuerung 43 werden Schaltungsmittel zur Abgabe des zweiten Steuersignals DMA-busy und zur Realsierung mindestens eines Zyklenzählers für eine vorbestimmte Anzahl an 16 Bit-Datenwörtern vorgesehen.

Auf die gleiche - jedoch nicht näher gezeigten - Weise werden wortweise die binären Pixeldaten für den ersten Druckkopf via Bus 5 geliefert und liegen an einem entsprechenden Dateneingang des ersten und zweiten Zwischenspeichers 411 und 412 für Pixeldaten für den ersten Druckkopf an. Die - nicht detailliert gezeigte - erste Pixeldatenaufbereitungseinheit 41 für den ersten Druckkopf umfasst ebenfalls einen ersten und zweiten Zwischenspeicher 411 und 412, welche jeweils eingangsseitig an die niederwertigen 16 Bit des Datenbusses des Busses 5 angeschlossen sind. Das von der DMA-Steuerung 43 gelieferte Adressenschreibsignal AW liegt ebenfalls jeweils an einem separaten Adresseneingang des ersten und zweiten Zwischenspeichers 411 und 412 für Pixeldaten für den ersten Druckkopf an. Von der DMA-Steuerung 43 wird ein erstes Auswahlsignal Sel_1.1 für Pixeldaten für den ersten Druckkopf geliefert und liegt an einem separaten Steuereingang des ersten Zwischenspeichers 411 für Pixeldaten für den ersten Druckkopf an. Von der DMA-Steuerung 43 wird ein zweites Auswahlsignal Sel_1.2 für Pixeldaten für den ersten Druckkopf geliefert und liegt an einem separaten Steuereingang des zweiten Zwischenspeichers 412 für Pixeldaten für den ersten Druckkopf an.
Das vom Adressengenerator 44 gelieferte Adressenlesesignal AR liegt ebenso wieder an einem separaten Adresseneingang des ersten und zweiten Zwischenspeichers 411 und 412 für Pixeldaten für den ersten Druckkopf und an einem ersten Selektor 413 an. Die parallelen Datenausgänge des ersten und zweiten Zwischenspeichers 411 und 412 für Pixeldaten für den ersten Druckkopf liegen an einem ersten und zweiten Eingang des Selektors 413 an, der vom Adressengenerator 44 gesteuert an seinem Ausgang ein 14 Bit paralleles Datensignal an den parallelen Dateneingang eines Schieberegisters 414 für Pixeldaten für den ersten Druckkopf liefert. Das Schieberegister 414 wird durch das Schiebetaktsignal SCL der Druckersteuerung 45 gesteuert und gibt ein serielles Datenausgangssignal Serial data out 1 aus. Die Druckersteuerung 45 gibt einen Schiebetakt SCL an das Schieberegister 414 für Pixeldaten für den ersten Druckkopf sowie Signale Latch und Print1 für die Steuerung des Pen Driver Boards 11 aus. Die Druckersteuerung 45 ist über eine Steuerleitung für die Ausgabe des Signals SO mit einem entsprechenden Steuereingang der DMA-Steuerung 43 und mit der Pixeldatenaufbereitungseinheit 41 verbunden.

Der Zyklenzähler der DMA-Steuerung 43 ist ein Wortzähler für eine vorbestimmte Anzahl an 16 Bit-Datenworten, der durch ein DMA-start-Signal gestartet wird. Die DMA-Steuerung ist beispielsweise Bestandteil einer anwendungsspezifischen Schaltung (ASIC), wobei der Zyklenzähler einerseits mit den vorgenannten Mitteln zur Generierung und Ausgabe von Adressenschreibsignalen AW und andererseits mit Mitteln zur Generierung und Ausgabe von Auswahlsignalen verbunden ist, wobei die letzteren - in nicht gezeigter Weise - mindestens ein Ausgabemittel und ein erstes und zweites Vergleichsmittel aufweisen. Das erste Vergleichsmittel steuert in Abhängigkeit vom SO-Signal die Ausgabemittel an, um bis zum Erreichen einer ersten vorbestimmten Anzahl an 16 Bit-Datenworten ein für die erste Pixeldatenaufbereitungseinheit 41 bestimmtes Auswahlsignal Sel_1.1 oder Sel_1.2 und um nach dem Erreichen der ersten vorbestimmten Anzahl an 16 Bit-Datenworten ein für die zweite Pixeldatenaufbereitungseinheit 42 bestimmtes Auswahlsignal Sel_2.1 oder Sel_2.2 auszugeben. Das zweite Vergleichsmittel erzeugt nach dem Erreichen einer zweiten vorbestimmten Anzahl von 40 * 16 Bit-Datenworten ein DMA-busy-Signal mit dem Wert 'Null' und ist mit einer Steuerleitung verbunden, die am Zyklenzähler anliegt, um das Zählen von DMA-Zyklen zu beenden. Während die Pixeldaten für einen Datenstring per direkten Speicherzugriff (DMA) in die jeweils ersten Zwischenspeicher 411 und 421 geladen und dort zwischen gespeichert werden, können die jeweils zweiten Zwischenspeicher 412 und 422 ausgelesen werden. Mittels des speziellen Adressengenerators 44 und den Selektoren 413, 423 werden die binären Pixeldaten aus diesen Zwischenspeichern in der von den Druckköpfen benötigten Reihenfolge ausgelesen, gruppenweise gesammelt und anschließend mittels Schieberegister 414, 424 seriell zu den beiden Druckköpfen übertragen. Mindestens eine halbe Druckbildspalte wird von dem ersten Druckkopf und mindestens eine andere halbe Druckbildspalte wird von dem zweiten Druckkopf gedruckt.

Durch diese Lösung können binäre Pixeldaten im Pixelspeicher in einer optimalen Ordnung gespeichert vorliegen, die den Mikroprozessor bei der Druckbildänderung entlastet. Durch die Datenübertragung per DMA wird der Mikroprozessor ebenfalls entlastet.

In der Druckersteuerung 45 ist ein Datenstringzähler realisiert (nicht näher gezeigt), wobei jeder Datenstring die oben genannte Anzahl von 40 ∗ 16 Bit-Datenwörtern aufweist.

Nachdem die aus einem Datenstring entnommenen und aufbereiteten binären Pixeldaten gedruckt worden sind, wird der Datenstringzähler beim Auftreten der LH-Flanke des Encodertaktes inkrementiert. Wenn ein vorgegebener Wert U erreicht ist wird, wird das Drucken des Druckbildes, vorzugsweise eines Frankierabdruckes, beendet.

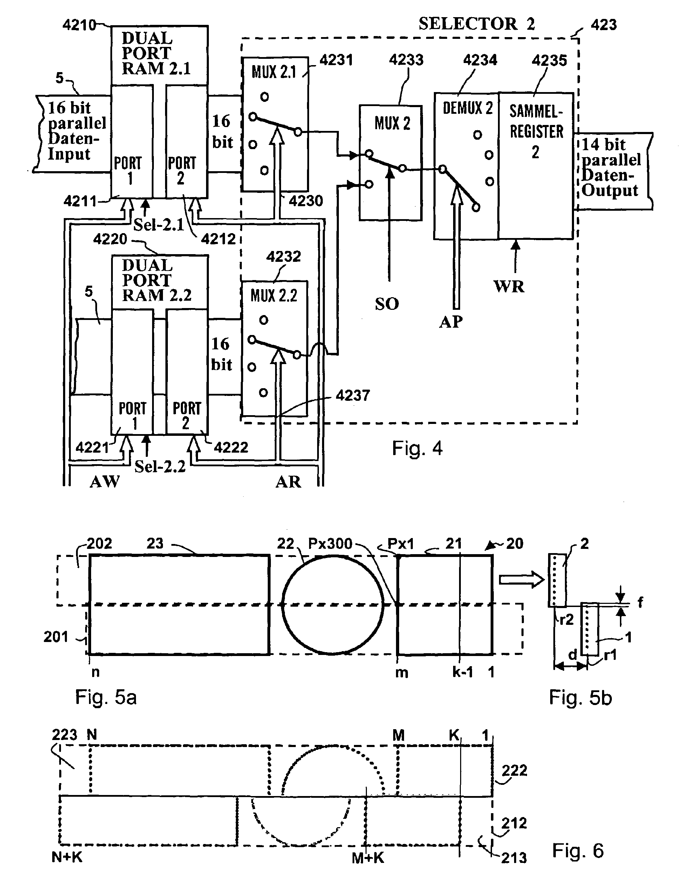

In der Figur 4 ist die Pixeldatenaufbereitungseinheit für den zweiten Druckkopf detallierter dargestellt. Die ersten und zweiten Zwischenspeicher 421 und 422 für Pixeldaten für den zweiten Druckkopf sind beispielsweise als Dualport-RAM's 4210 und 4220 realisiert. Letztere werden für das Einlesen der binären Pixeldaten ausgewählt, indem das von der DMA-Steuerung gelieferte erste bzw. zweite Auswahlsignal Sel_2.1 bzw. Sel_2.2 an einem separaten Steuereingang des jeweils ersten Ports 4211 bzw. 4221 des ersten bzw. zweiten Dualport-RAM's 4210 bzw. 4220 anliegt. An den jeweiligen ersten Ports 4211 bzw. 4221 liegt ein Adressenschreibsignal AW beim Einlesen von Pixeldaten an. Die zuvor eingelesenen Bits werden anschließend beispielsweise aus dem ersten bzw. zweiten Dualport-RAM 4210 bzw. 4220 ausgelesen. Dafür wird am zweiten Port 4212 bzw. 4222 der höherwertige Teil eines Adressenlesesignals AR angelegt, wobei der letztere vom speziellen Adressengenerator 44 geliefert wird. Nachfolgend wird beschrieben, wie die Bits in eine vom zweiten Druckkopf benötigten Reihenfolge gebracht werden. Ein nachgeschalteter zweiter Selektor 423 wählt mittels eines ersten Multiplexers 4231 aus den 16 Bit ein einzelnes Bit der binären Pixeldaten aus, wenn an seinem Adresseneingang 4230 der niederwertige Teil des Adressenlesesignals AR anliegt, welches ebenfalls vom speziellen Adressengenerator 44 geliefert wird. Der dem ersten Dualport-RAM 4210 nachgeschaltete erste Multiplexer 4231 ist ausgangsseitig mit einem ersten Dateneingang eines dritten Multiplexers 4233 und ein dem zweiten Dualport-RAM 4220 nachgeschalteter zweiter Multiplexer 4232 ist ausgangsseitig mit einem zweiten Dateneingang des dritten Multiplexers 4233 verbunden. Der zweite Multiplexer 4232 hat einen Adresseneingang 4237 für den niederwertigen Teil des Adressenlesesignals AR.
Am Steuereingang des dritten Multiplexers 4233 liegt ein Umschaltsignal SO an, so dass beispielsweise das vorgenannte einzelne Bit der binären Pixeldaten ausgegeben wird und am Dateneingang eines nachgeschalteten Demultiplexers 4234 anliegt. Dem Demultiplexer 4234 ist ein rücksetzbares Sammelregister 4235 für binäre Pixeldaten nachgeschaltet, welches einen 14 Bit parallelen Datenausgang aufweist. Das vorgenannte einzelne Bit der binären Pixeldaten wird in das Sammelregister 4235 übernommen, wenn ein Schreibsignal WR an einem Steuereingang des Sammelregisters 4235 angelegt wird. Dem Demultiplexer 4234 wird eine primitive Adresse AP zugeführt, welche den Speicherplatz des Bits im Sammelregister 4235 einstellt und somit letztendlich die Reihenfolge festlegt, an welcher Stelle das Bit im Datenstrom steht, der seriell zum Pen Driver Board 12 übermittelt wird. Das vorgenannte Sammelregister erzeugt an seinem parallelen Datenausgang nacheinander Gruppen von 14 Bit Binärdaten, die zur Treibereinheit (Pen-Driver-Board) des ½ Zoll Tintenstrahldruckkopfes übermittelt werden. Außerdem kann über das Schieberegister - in nicht gezeigter Weise - ebenso die zugehörige Primitivadresse zur Treibereinheit übermittelt werden. Nach Übermittlung einer 22. Datengruppe sind alle der 300 binären Pixeldaten übermittelt, welche ein ½ Zoll Tintenstrahldruckkopf zum Drucken benötigt. Die andere Hälfte des Druckbildes wird von dem ersten Druckkopf gedruckt. Die Pixeldatenaufbereitungseinheit für den ersten Druckkopf ist in gleichartiger Weise aufgebaut. Die gesamte Druckdatensteuerung kann vorzugsweise mit einer anwendungsspezifischen Schaltung (ASIC) bzw. programmierbaren Logik, wie beispielsweise Spartan-ll 2,5V FPGA der Firma XILINX (www.xilinx.com) realisiert werden.

In der Figur 5a ist ein Druckbild von einer Frankiermaschine mit zwei Druckköpfen vereinfacht dargestellt. Das vereinfachte Druckbild 20 weist ein Frankierstempelbild 21, ein Poststempelbild 22 und ein Werbestempelbild 23 auf, die bei Bewegung eines Frankiergutes (nicht gezeigt) in Transportrichtung (weisser Pfeil) nacheinander gedruckt werden. Das Druckbild 20 ist in zwei parallel liegende Bereiche 201 und 202 aufgeteilt, die orthogonal zur Frankierguttransportrichtung angeordnet sind, wobei der Druckkopf 1 nur den Bereich 201 und der Druckkopf 2 nur den Bereich 202 bedruckt, wenn das Frankiergut in Transportrichtung bewegt wird. Jeder der zwei Bereiche 201 und 202 ist ein Druckhalbbild des Druckbildes, dass durch orthogonal zur Frankierguttransportrichtung angeordnete gemeinsame Druckbildspalten 1 bis n geschnitten wird.

Die Figur 5b zeigt die Anordnung der zwei Druckköpfe zum Drucken des Druckbildes auf eine Oberfläche eines Poststückes, welches relativ zu den Druckköpfen in Transportrichtung (weisser Pfeil) bewegt wird. Die Düsenreihen r1, r2 der beiden Druckköpfe 1 und 2 sind um eine Distanz d zueinander in Transportrichtung versetzt und überlappen in Druckbildspaltenrichtung auf einer Strecke f. Die Distanz d entspricht einer Anzahl von k Druckbildspalten. In den Druckbereich des zweiten Druckkopfes 2 läuft zuerst eine Poststückoberfläche ein, auf welcher eine erste Anzahl an Druckbildspalten 1 bis k-1 des Bereiches 202 gedruckt wird. Durch den ersten Druckkopf 1 wird die erste Druckbildspalte zum gleichen Zeitpunkt gedruckt, wenn bereits die k-te Druckbildspalte durch den zweiten Druckkopf 2 gedruckt wird. Dieser Versatz wird bei der Anordnung binärer Pixeldaten im Pixelspeicher berücksichtigt.

Die Figur 6 zeigt eine Darstellung von Pixeldaten für zwei Druckhalbbilder, die im Pixelspeicher gespeichert sind, wobei jeweils ein Druckhalbbild zum Drucken durch einen Druckkopf vorgesehen ist und im Pixelspeicher völlig unverzerrt wiedergespiegelt wird. Nur die Pixeldaten mit dem Datenwert Eins sind als farbiger Punkt dargestellt. Die Pixeldaten mit dem Datenwert Null sind als weisser Punkt dargestellt. Vereinfachend wird angenommen, alle Düsen eines Druckkopfes lägen in einer einzigen Reihe, welche parallel zu einer Druckbildspalte ausgerichtet ist. Die Darstellung von Pixeldaten für das erste Druckhalbbild beginnt in der Position 1. Die betreffenden Pixeldaten für ein vereinfachtes Druckbild liegen für zwei Druckhalbbilder vor und sind um einen Abstand K versetzt abgebildet, wobei ein erster Bereich 212 einer Darstellung von Pixeldaten für die untere Hälfte des Druckbildes mit dem Datenwert Null für Pixeldaten im Vorspann 213 beginnt und ein zweiter Bereich 222 einer Darstellung von Pixeldaten für die obere Hälfte des Druckbildes mit dem Datenwert Null für Pixeldaten im Nachspann 223 endet. Beide, d.h. der Vorspann und Nachspann kennzeichnen den vorgenannten Versatz, der im Adressenraum des Pixelspeichers zu berücksichtigen ist. Aufgrund des Versatzes beginnt die Darstellung von Pixeldaten für das zweite Druckhalbbild, welches der unteren Hälfte des Druckbildes entspricht, erst in der Position K. Eine erste Anzahl binärer Pixeldaten liegen in der Darstellung von Pixeldaten in einer Position M auf einer Linie, welche der Position der Druckbildspalte m im zweiten Druckbildbereich 202 gemäß Fig.5a entspricht. Eine zweite Anzahl binärer Pixeldaten liegen in der Darstellung von Pixeldaten in einer Position M+K, d.h. auf einer anderen um K versetzten Position in einer Linie, welche die Druckbildspalte m im ersten Druckbildbereich 201 gemäß Fig.5a widerspiegelt.

Wenn je Druckkopf zwei Düsenreihen oder mehr existieren, wobei die Düsen unterschiedlicher Düsenreihen zueinander versetzt (interlaced) sind, kann ein Druckbild mit einer verdoppelten oder größeren Anzahl an Pixeln gedruckt werden. Im Pixelspeicher sind dann die zusätzlichen binären Daten in einer geeigneten Ordnung zu speichern, die eine leichte Änderung von Bildelementen erlaubt.

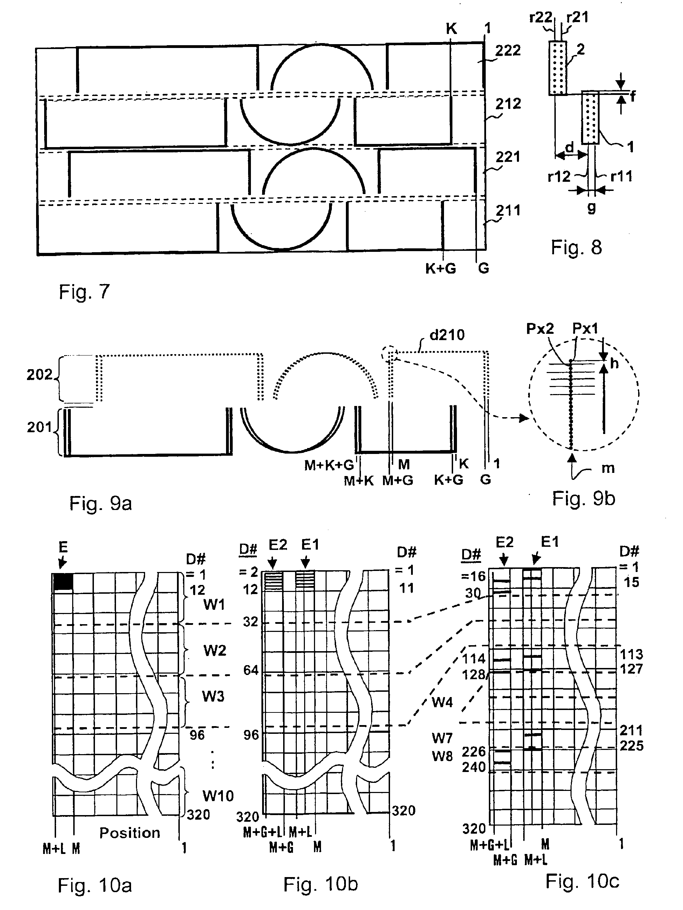

Die Figur 7 zeigt eine Darstellung von Pixeldaten für vier Druckhalbbilder im Pixelspeicher. Aus Platzgründen und der Anschaulichkeit halber wurden die vier Druckhalbbilder untereinander gezeichnet dargestellt. In der Praxis sind die Pixeldaten für eine Druckbildspalte besispielsweise in vier aufeinander folgenden Speicherbereichen angeordnet. In der Darstellung sind beispielsweise ein erster Bereich 212 und ein zweiter Bereich 222 für die binären Pixeldaten für die jeweils zweiten Düsenreihen je Druckkopf sowie ein dritter Bereich 221 und ein vierter Bereich 211 für die zusätzlichen binären Pixeldaten für die jeweils ersten Düsenreihen je Druckkopf vorgesehen. Die binären Pixeldaten der vier Druckhalbbilder mit dem Datenwert 'Eins' sind der Einfachheit halber mit einander verbunden als durchgezogene Linien gezeichnet. Bei dieser Widerspiegelung des Druckbildes durch die binären Pixeldaten bleibt die Gestalt der Bildelemente des Druckbildes erhalten.

In der Figur 8 ist eine Anordnung von zwei Druckköpfen zum Drucken eines Druckbildes mit einer verdoppelten Auflösung dargestellt. Jeder Druckkopf besitzt zwei Düsenreihen r11 und r12 bzw. r21 und r22, welche zueinander jeweils einen Abstand g einnehmen. Weiterhin ist eine orthogonal zur Transportrichtung gelegene Strecke f gezeigt, wo die Düsen im Randbereich der Düsenreihen von beiden Druckköpfen überlappen. Die jeweils ersten oder zweiten Düsenreihen der beiden Druckköpfe 1 und 2 liegen parallel zueinander. Beide Druckköpfe 1 und 2 sind in Transportrichtung mit einem Abstand d beabstandet. Bei einem postalischen ½ Zoll Inkjet-Druckkopf mit Bubble-jet-Technologie, der in einer Kartusche beispielsweise vom Typ HP 5165A der Firma Hewlett Packard angeordnet ist, liegen alle Düsen mit einer ungeraden Nummer in der Düsenreihe mit der ungeraden Nummer bzw. alle Düsen mit einer geraden Nummer liegen in der Düsenreihe mit der geraden Nummer.
Aufgrund des o.g. Versatzes d der Druckköpfe 1, 2 in Transportrichtung beginnt die - in der Figur 7 gezeigte - Darstellung von Pixeldaten für das durch die zweite Düsenreihe r12 des ersten Druckkopfes 1 zu druckende erste Druckhalbbild erst in der Position K.

Aufgrund des o.g. Versatzes der Düsenreihen r11, r12 bzw. r21, r22 jedes der Druckköpfe 1, 2 beginnt die - in der Figur 7 gezeigte - Darstellung von Pixeldaten für das durch die erste Düsenreihe r21 des zweiten Druckkopfes zu druckende dritte Druckhalbbild erst in der Position G.
Aufgrund des o.g. Versatzes der Druckköpfe in Transportrichtung und des des o.g. Versatzes der Düsenreihen jedes der Druckköpfe beginnt die - in der Figur 7 gezeigte - Darstellung von Pixeldaten für das durch die erste Düsenreihe r11 des ersten Druckkopfes zu druckende erste Druckhalbbild erst in der Position K+G.

Es sind weitere Ordnungen von Binärdaten im Pixelspeicher denkbar, die eine leichte Änderung von Bildelementen erlauben.

Die Figur 9a zeigt eine Darstellung von Pixeldaten für vier Druckhalbbilder im Pixelspeicher für eine bevorzugte Anordnung der Pixeldaten. Ein aus einer Anzahl von 20 aufeinanderfolgenden Datenwörtern mit jeweils 16 binären Pixeldaten bestehender Datenstring von binären Pixeldaten aus dem Pixelspeicher ergibt ein identisches Abbild der Pixel mit geraden Nummern einer ersten Druckbildspalte und der Pixel mit ungeraden Nummern einer zweiten Druckbildspalte, die auf ca. ½ Zoll Breite von einem Inkjet-Druckkopf mit zwei Düsenreihen gedruckt werden.
Ein Muster mit solchen spaltenweise angeordneten Datenstrings - wie in der Figur 9a gezeigt ist - ergibt somit ein identisches Abbild des durch einen Inkjet-Druckkopf mit ca. ½ Zoll Breite ausgedruckten Teiles des Frankierstempeldruckbildes. Die binären Pixeldaten, die von demselben Druckkopf gedruckt werden, liegen in ein und demselben Bereich 201 bzw. 202 und sind in benachbarten spaltenweise angeordneten Datenstrings dargestellt. In beiden Bereichen gilt die gleiche oben genannte Ordnung der Datenstrings. Die binären Pixeldaten für Druckhalbbilder, die unterschiedlichen Düsenreihen desselben Druckkopfes zuordenbar sind, werden in der Darstellung in ein und demselben Bereich 201 bzw. 202 in zueinander versetzten Positionen angeordnet, d.h. die binären Pixeldaten der Druckhalbbilder einer Hälfte des Druckbildes können im Pixelspeicher nacheinander verschachtelt angeordnet sein. Die Darstellung der binären Pixeldaten der jeweils zwei Druckhalbbilder für die beiden Düsenreihen desselben Druckkopfes ist in einem Bereich 202, der die obere Hälfte des Druckbildes widerspiegelt, gepunktet gezeichnet. Jeder Punkt soll ein binäres Pixeldatum mit den Datenwert 'Eins' widerspiegeln. Im Datenstring, der an der ersten Position dargestellt ist, liegen die binären Pixeldaten für die Düsen der Düsenreihe mit einer geraden Nummer oder die binären Pixeldaten für die Düsen mit einer geraden Nummer und haben zum Beispiel den Datenwert 'Eins'. Die binären Pixeldaten für die Düsen der Düsenreihe mit einer ungeraden Nummer oder für alle ungeraden Nummern der Düsen, die im Datenstring liegen, der an der ersten Position dargestellt ist, haben zum Beispiel den Datenwert 'Null'.
Im Datenstring, der an der Position G dargestellt ist, liegen die binären Pixeldaten für die Düsen der Düsenreihe mit einer ungeraden Nummer oder die binären Pixeldaten für die Düsen mit einer ungeraden Nummer und haben zum Beispiel den Datenwert 'Eins'. Die binären Pixeldaten für die Düsen der Düsenreihe mit einer geraden Nummer oder für alle Düsen mit einer geraden Nummer, die im Datenstring liegen, welcher an der Position G dargestellt ist, haben zum Beispiel den Datenwert 'Null'. Die binären Pixeldaten d210 des Rahmens des Frankierstempelbildes sind für jeweils zwei Druckhalbbilder zwar in zueinander versetzten Positionen (zum Beispiel M und M+G) gespeichert aber werden beim Drucken einer Druckbildspalte (zum Beispiel m) als zwei in idealer Weise übereinanderliegenden Reihen an Pixeln zu unterschiedlichen Zeitpunkten ausgedruckt, so dass beide nach dem Drucken praktisch eine einzige Linie in Druckbildspaltenrichtung ergeben. Nur zur Unterscheidung der Wiederspiegelung der unteren Hälfte des Druckbildes wurde in einem weiteren Bereich 201 der Figur 9a eine durchgezogene dicke Linie verwendet, um auch die binären Pixeldaten der jeweils zwei Druckhalbbilder für die beiden Düsenreihen des anderen Druckkopfes als einfaches Muster darzustellen.

In der Darstellung zum spaltenweisen Druck von Pixeln von Figur 9b ist eine Druckbildspalte m gezeigt, in welche beide oben genannte Reihen an Pixeln fallen. Dabei wird von einer ersten Düsenreihe r1 ein erster Pixel Px1 und von einer zweiten Düsenreihe r2 ein erster Pixel Px2 gedruckt, welcher orthogonal zur Transportrichtung einen Abstand h aufweisen. Für eine solche Druckbildspalte existieren im Pixelspeicher Datenworte mit binären Pixeldaten für Düsen mit ungeraden bzw. geraden Nummern. Je Datenwort sind 32 Bit gespeichert. Diesen Datenworten sind jeweils Adressen zugeordnet.

Die Figur 10a zeigt eine Darstellung der binären Pixeldaten eines Bildelementes für eine Anordnung von zwei Druckköpfen mit jeweils nur einer Düsenreihe, entsprechend der Fig.5b. Die binären Pixeldaten sind in einem Teilbereich des Pixelspeichers gespeichert. Für eine Abbildung E eines Bildelements sind diejenigen binären Pixeldaten als schwarze Bildpunkte dargestellt, welche den Wert 'Eins' haben. Der Wert 'Null' wird nicht farbig dargestellt. Zehn Datenworte W1 bis W10 von jeweils 32 Bit Binärdaten bilden einen Datenstring mit binären Pixeldaten, die zum Drucken einer Druckbildspalte mit einer Düsenreihe erforderlich sind. Eine erster Datenstring von 320 binären Pixeldaten ist rechts in der Fig.10a mittels weissen Punkten dargestellt, die in der Position 1 auf einer Reihe liegen. Die binären Pixeldaten des ersten Datenstrings sind von der Datennummer D# = 1 bis zur Datennummer D# = 320 durchnummeriert und haben den Wert 'Null'.
Aus Platzgründen endet die Darstellung mit einem Datenstring auf der Position M+L und es wurde nur ein mit den jeweils ersten drei Datenwörtern W1, W2 und W3 eines Datenstrings ansprechbarer Bereich zusammenhängend dargestellt, mit welchen nur ca. ein Drittel der für 300 Düsen erforderlichen binären Pixeldaten ansprechbar ist. Das soll aber keine Begrenzung für eine Darstellung von Datenstrings bedeuten. Eine praktische Begrenzung ergibt sich nur aus der maximalen Anzahl an Datenworten. Welche in einem Pixelspeicher speicherbar sind. Die in der Darstellung verwendete Nummerierung der binären Pixeldaten entspricht der Nummerierung der Düsen in einer Düsenreihe und beginnt für jeden Datenstring mit der Nummer Eins in der ersten Gruppe. Die Nummerierung der binären Pixeldaten der zehnten Gruppe endet jeweils mit der Nummer 320. Das wiederholt sich für jeden Datenstring bis die Position M erreicht ist. Wie bereits anhand der - in der Figur 6 gezeigten - Anordnung von binären Pixeldaten für zwei Druckhalbbilder im Pixelspeicher erläutert wurde, kann bereits das Bildelement E mittels eines ersten Datenwortes W1 adressiert werden. Das wiederholt sich bis zur Position M+L und somit ergibt sich, weil ein jeder Binärwert 'Eins' als schwarzer Punkt dargestellt ist, die Abbildung E des Bildelementes als schwarzes Kästchen. Bei jeweils zwölf ersten binären Pixeldaten mit dem Wert 'Eins' für eine Anzahl Datenstrings von der Postion M bis zur Position M+L, wobei L gleich sechs sei, wird das vorgenannte schwarze Kästchen als 12 Pixel langes und 6 Pixel breites Pixelfeld mit einer Auflösung von 600 * 300 dpi durch einen der beiden Druckköpfe mit einer einzigen Düsenreihe gedruckt. Ein Datamatrixcode hat beispielsweise 48 x 48 Bildelemente.

Da solche Tintenstrahldruckköpfe mit nur einer Düsenreihe und mit der erforderlichen Auflösung nicht immer verfügbar sind, bezieht sich die Darstellung in der Figur 10b auf handelsübliche postalische ½ Zoll Tintenkartuschen vom Typ HP51645A der Firma Hewlett Packard. Letztere weisen zwei Düsenreihen pro Tintenstrahldruckkopf auf. Mit zwei Tintenstrahldruckköpfe solcher Art - in der in Fig.8 gezeigten Anordnung - wird zum Beispiel auf einem 1 Zoll breiten Streifen ein Abdruck mit einer Auflösung von 300 dpi in Transportrichtung und mit einer Auflösung von 600 dpi im orthogonaler Richtung zur letzteren ermöglicht.

Die Figur 10b zeigt eine Darstellung der binären Pixeldaten eines Bildelementes, das vorteilhaft aufgeteilt im Pixelspeicher gespeichert ist. Die binären Pixeldaten eines Bildelementes für die Düsen mit einer geraden Nummer D# und für die Düsen mit einer ungeraden Nummer D# liegen in unterschiedlichen Datenstrings immer im gleichrangigen Datenwort.
Die binären Pixeldaten mit dem Datenwert 'Eins' für die Düsen der Düsenreihe mit einer geraden bzw. ungeraden Nummer oder anders gesagt, für die ungeraden bzw. geraden Nummern der Düsen, bilden jeweils eine Abbildung E1 bzw. E2 des Bildelementes. Im vorliegenden Beispiel liegen beide Abbildungen im jeweils ersten Datenwort von unterschiedlichen Datenstrings. Die binären Pixeldaten mit dem Datenwert 'Eins' für die Düsen der Düsenreihe mit einer geraden bzw. ungeraden Nummer oder anders gesagt, für die ungeraden bzw. geraden Nummern der Düsen, liegen in Datenstrings auf der Position M ≤ E1 ≤ Position M+L bzw. auf der Position M+G ≤ E2 ≤ Position M+G+L. Die binären Pixeldaten mit dem Datenwert 'Eins' und mit der gleichen Datennummer von unmittelbar benachbarten Datenstrings wurden nur zur Verdeutlichung nicht als Punkt, sondern als dicker schwarzer Strich dargestellt.
Aus Platzgründen ist wieder nur ein mit den jeweils ersten drei Datenwörtern W1, W2 und W3 eines Datenstrings ansprechbarer Bereich zusammenhängend dargestellt worden, was für eine Darstellung der binären Pixeldaten der Abbildungen E1, E2 des Bildelementes ausreicht.
Die gespeicherten binären Pixeldaten eines Bildelementes liegen bei beiden Darstellungen der Figuren 10a und 10b jeweils innerhalb eines 32 Bit-Datenwortes W1. In vorteilhafter Weise müssen keine weiteren 32 Bit-Datenwörter aufgerufen werden, insbesondere wenn variable Bildelemente von Abdruck zu Abdruck geändert werden. Damit wird Rechenzeit des Mikroprozessors eingespart. Vorzugsweise wird also im Pixelspeicher eine Ordnung organisiert, die bereits in Verbindung mit der Fig.9a erläutert wurde und die es ermöglicht, die Anzahl an Datenworten zu reduzieren, die vom Mikroprozessor aufgerufen werden müssen, um ein Bildelement zu ändern.

Die Figur 10c zeigt eine Darstellung der in bekannter Weise gespeicherten binären Pixeldaten eines Bildelementes im Pixelspeicher, wobei die Pixeldaten im Pixelspeicher so angeordnet sind, dass diese beim Drucken nacheinander ausgelesen werden können. Zur Widerspiegelung des vorgenannten Bildelementes sind wieder eine Abbildung E2 von binären Pixeldaten mit geraden Datennummern D# und eine Abbildung E1 von binären Pixeldaten mit ungeraden Datennummern D# vorhanden, wobei die binären Pixeldaten mit dem Datenwert 'Eins' und mit der gleichen Datennummer als dicker schwarzer Strich dargestellt sind. Im Unterschied zu den - in den Figuren 10a und b gezeigten - Darstellungen haben die geraden Datennummern D# und ungeraden Datennummern D# der gespeicherten binären Pixeldaten in der Darstellung nach Figur 10c nicht mehr die gleichen Nummen, wie die angesteuerten zugeordneten Düsen eines Druckkopfes. Die Datennummern D# = 0 bis 240 wurde zur Verdeutlichung der Binärdaten angegeben, die für ein Abdrucken des vorgenannten Bildelementes benutzt werden. Das Bildelement wird von den zugehörigen Düsen D1 bis D12 eines Druckkopfes ausgedruckt. Nun mußte aus Platzgründen der Maßstab in der Darstellung verkleinert werden, um den erhöhten Aufwand beim Zugriff auf die gespeicherten binären Pixeldaten zu verdeutlichen, auf welche der Mikroprozessor bei einer Änderung nur eines Bildelementes im Druckbild zugreifen muß. Der erhöhte Aufwand wird durch die weit auseinander liegenden Datenwörter W1, W4, W7 und W8 verursacht. Es ist klar, dass die Rechenzeit des Mikroprozessors größer ist, wenn die gespeicherten binären Pixeldaten eines Bildelementes nach einem komplizierten Muster verteilt sind bzw. weit auseinander in nicht gleichrangigen Datenwörtern liegen, so dass viele Schritte erforderlich sind, um eine Änderung eines Bildelementes oder im Muster des Druckbildes durchzuführen.

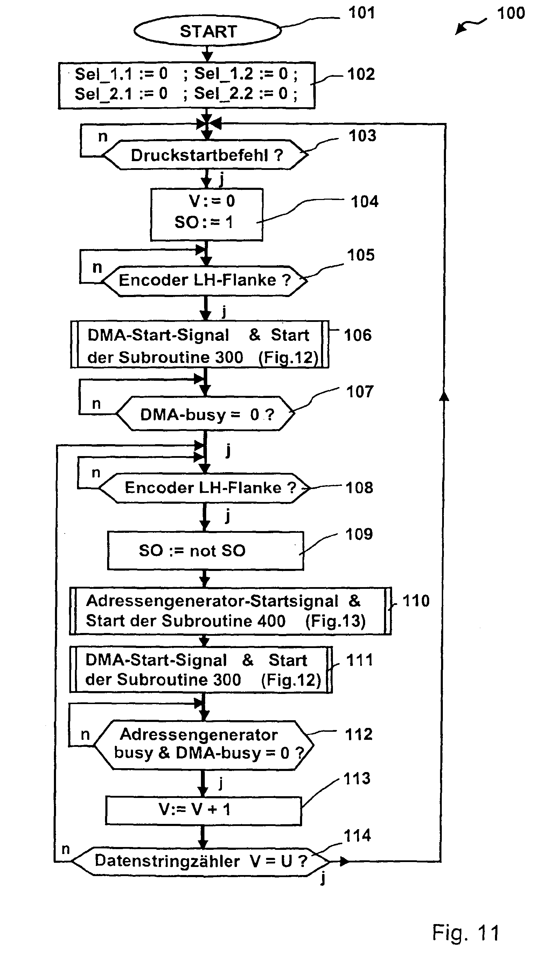

Die Figur 11 zeigt einen Flußplan zur Ablaufsteuerung der Druckersteuerung. Nach dem Einschalten im Schritt 101 wird ein Schritt 102 erreicht und in der Routine 100 der Ablaufsteuerung werden alle Auswahlsignale Sel_1.1, Sel_1.2, Sel_2.1, Sel_2.2 auf den Wert 'Null' gesetzt. In einem ersten Abfrageschritt 103 wird nun ein via Bus übermitteltes Datenwort hinsichtlich des Auftretens eines Befehls zum Druckstart ausgewertet. Ist der letztere noch nicht erteilt worden, dann wird in eine Warteschleife verzweigt. Andererseits wird nach dem Druckstart in einem Schritt 104 ein Setzen des Spaltenzählwertes V auf den Wert 'Null'. Das Umschaltsignal SO wird auf den Wert 'Eins' gesetzt und ausgegeben. In einem zweiten Abfrageschritt 105 wird nun das Encodersignal e hinsichtlich des Auftretens einer LH-Flanke ausgewertet. Ist die letztere noch nicht aufgetreten, dann wird in eine Warteschleife verzweigt. Andererseits wird in einem Schritt 106 ein Signal DMA-Start ausgegeben und eine Subroutine 300 gestartet, welche bestimmte Auswahlsignale Sel_1.1, Sel_1.2, Sel 2.1 oder Sel_2.2 auf den Wert 'Eins' setzt, um die binären Pixeldaten in die Zwischenspeicher der Pixeldatenaufbereitungseinheiten 41 und 42 zu übernehmen, was anhand der Figur 12 später noch genauer erläutet wird.
In einem dritten Abfrageschritt 107 wird nun das DMA-busy-Signal hinsichtlich dessen ausgewertet, ob es auf den Wert 'Null' gesetzt worden ist. Ist das letztere noch nicht der Fall, dann wird in eine Warteschleife verzweigt. Ist jedoch das DMA-busy-Signal auf den Wert 'Null' gesetzt worden, dann wird ein vierter Abfrageschritt 108 erreicht, in welchem das Encodersignal hinsichtlich des Auftretens einer LH-Flanke ausgewertet wird. Ist die letztere noch nicht aufgetreten, dann wird in eine Warteschleife verzweigt. Andererseits wird in einem Schritt 109 das Umschaltsignal SO logisch negiert und dann ausgegeben. Anschließend wird im Schritt 110 der Adressengenerator aktiviert und eine Subroutine 400 gestartet, welche für die Pixeldatenaufbereitungseinheiten 41 und 42 bestimmte Leseadressen AR und Steuerungssignale, wie das Umschaltsignal SO, die Primitivadresse AP, das Schreibsignal WR und ein Ladesignal LD erzeugt. Im Schritt 111 wird ein DMA-Start-Signal ausgegeben und die DMA-Steuerung aktiviert, zum erneuten Starten der vorgenannten Subroutine 300. Beide Subroutinen 300 und 400 laufen parallel zueinander ab. In einem fünften Abfrageschritt 112 wird ausgewertet, ob der Adressengenerator mit seiner Subroutine 400 fertig ist und ob das DMA-busy-Signal auf den Wert 'Null' gesetzt worden ist. Ist das erstere oder letztere noch nicht der Fall, dann wird in eine Warteschleife verzweigt. Ist jedoch der Adressengenerator mit seiner Subroutine 400 fertig und das DMA-busy-Signal ist auf den Wert 'Null' gesetzt worden, dann wird ein Schritt 113 erreicht. Im Schritt 113 wird der Datenstringzählwert inkrementiert V:= V + 1.
In einem sechsten Abfrageschritt 114 wird ausgewertet, ob der Spaltenzählwert V einen Grenzwert U erreicht hat. Ist das noch nicht der Fall, dann wird auf den vierten Abfrageschritt 108 verzweigt. Anderenfalls wird auf den ersten Abfrageschritt 103 verzweigt und die Routine beginnt erneut, wenn im ersten Abfrageschritt 103 ein Druckstartbefehl festgestellt wird.

In der Figur 12 ist ein Flußplan zur DMA-Steuerung dargestellt. Eine solche Subroutine 300 wird aufgerufen, wenn von der Druckersteuerung 45 ein DMA-Startsignal an die DMA-Steuerung 43 ausgegeben wird (Schritt 301). In einem Schritt 302 der Subroutine 300 wird ein Wortzählwert W auf den Wert 'Null' gesetzt. Ein DMA-busy-Signal wird auf den Wert 'Eins' gesetzt und zur Druckersteuerung 45 übermittelt. In einem weiteren Schritt 303 der Subroutine 300 wird ein DMA-Anforderungssignal DMA_{REQ} mit einem Wert 'Null' an den Mikroprozessor 6 übermittelt. Letzterer übermittelt ein Quittungssignal DMA_{ACK} an die DMA-Steuerung 43. In einem ersten Abfrageschritt 304 der Subroutine 300 wird beim Nichtempfangen des Quittungssignals DMA_{ACK} mit einem Wert 'Null' in eine Warteschleife verzweigt. Vom ersten Abfrageschritt 304 der Subroutine 300 wird beim Empfangen des Quittungssignals DMA_{ACK} mit einem Wert 'Null' zu einem zweiten Abfrageschritt 305 weitergesprungen, wobei der Zustand des Umschaltsignals SO ermittelt wird. Hat das Umschaltsignal SO den Zustand gleich Eins, dann wird zu einem dritten Abfrageschritt 306 verzweigt. Anderenfalls hat das Umschaltsignal SO den Zustand gleich 'Null' und es wird zu einem vierten Abfrageschritt 309 verzweigt. Im dritten Abfrageschritt 306 wird geprüft, ob der Wortzähler einen Wert W kleiner als zwanzig aufweist. Für diesen Fall (W < 20) wird auf einen Schritt 307 verzweigt. Im Schritt 307 wird das erste Auswahlsignal für den ersten Druckkopf Sel_1.1. auf den Wert 'Eins' umgeschaltet und das Adressenschreibsignal AW erhält den aktuellen Wert W des Wortzählers. Im nachfolgenden Schritt 312 werden die Pixeldaten in die Zwischenspeicher der Pixeldatenänderungseinheiten 41, 42 übernommen. Anschließend werden im Schritt 313 alle Auswahlsignale auf den Wert 'Null' umgeschaltet und ein DMA-Anforderungssignal DMA_{REQ} mit einem Wert 'Eins' an den Mikroprozessor 6 übermittelt.

Dann wird im Schritt 314 der Wortzählwert W mit dem Wert 'Eins' inkrementiert. In einem anschließenden Abfrageschritt 315 wird geprüft, ob der Wortzähler einen Wert W kleiner als vierzig aufweist. Für diesen Fall, in welchem der Wortzähler einen Wert W < 40 aufweist, wird auf einen Schritt 303 zurückverzweigt. Anderenfalls wird auf einen Schritt 316 verzweigt, um ein Signal DMA-busy mit dem Wert 'Null' auszugeben, bevor das Ende (Schritt 317) der Subroutine 300 erreicht ist.
Anderenfalls, wenn also im dritten Abfrageschritt 306 festgestellt wird, dass der Wortzählwert W nicht kleiner als zwanzig ist, dann wird auf einen Schritt 308 verzweigt, in welchem das erste Auswahlsignal für den zweiten Druckkopf Sel_2.1. auf den Wert 'Eins' umgeschaltet wird und das Adressenschreibsignal AW den um den Wert 'Zwanzig' veminderten aktuellen Wert W des Wortzählers erhält. Im nachfolgenden Schritt 312 werden die Pixeldaten wieder in den Zwischenspeicher übernommen.
Im vorgenannten vierten Abfrageschritt 309 wird ebenfalls geprüft, ob der Wortzähler den Wert W < 20 aufweist, auch wenn zuvor im Abfrageschritt 305 festgestellt wurde, das Umschaltsignal SO den Zustand gleich Eins nicht aufweist. Wenn der Wortzähler den Wert N < 20 aufweist, dann wird im Schritt 310 das zweite Auswahlsignal für den ersten Druckkopf Sel_1.2. auf den Wert 'Eins' umgeschaltet und das Adressenschreibsignal AW erhält den aktuellen Wert W des Wortzählers. Im nachfolgenden Schritt 312 werden die Pixeldaten wieder in den Zwischenspeicher übernommen.
Anderenfalls, wenn der Wortzähler den Wert W < 20 nicht aufweist, wird vom vierten Abfrageschritt 309 auf einen Schritt 311 verzweigt, in welchem das zweite Auswahlsignal für den zweiten Druckkopf Sel_2.2 auf den Wert 'Eins' umgeschaltet wird und das Adressenschreibsignal AW den um den Wert 'Zwanzig' veminderten aktuellen Wert W des Wortzählers erhält. Im nachfolgenden Schritt 312 werden die Pixeldaten wieder in den Zwischenspeicher übernommen.

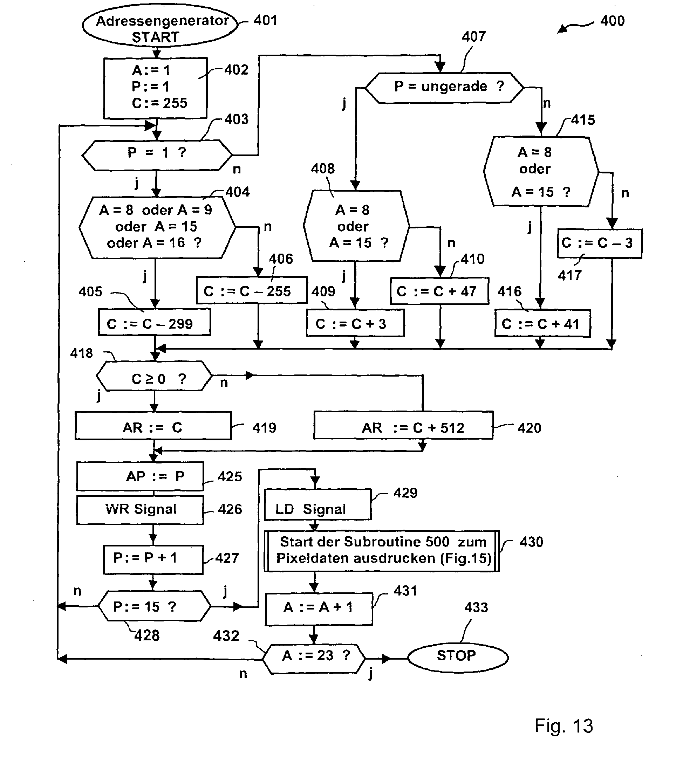

Die Figur 13 zeigt einen Flußplan zur Adressengenerierung. Die Adressen von gespeicherten binären Pixeldaten beginnen bei beiden Druckköpfen mit der Startadresse Null, die auf folgende Weise für das Adressenlesesignal AR generiert wird. Nach dem Start im Schritt 401 werden im Schritt 402 die Anfangswerte aufgerufen, A := 1 für einen Zähler der Adressengruppe, P:= 1 für einen Zähler der Primitivadresse AP und C:= 255 für einen Zähler des Adressenlesesignals AR. Im ersten Abfrageschritt 403 wird gefragt, ob der Zahlenwert P des Zählers der Primitivadresse gleich dem Wert Eins ist. Wenn das der Fall ist, wird der zweite Abfrageschritt 404 erreicht. Hier wird ermittelt, ob der Zähler A den Wert 8 oder 9 oder 15 oder 16 erreicht hat. Ist das der Fall, dann wird der Schritt 406 ausgeführt und vom Zahlenwert C des Zählers des Adressenlesesignals AR wird der Zahlenwert 255 subtrahiert. Im nachfolgenden dritten Abfrageschritt 418 wird festgestellt, dass der Zahlenwert C des Zählers des Adressenlesesignals AR größer/gleich dem Wert Null ist und dann zum Schritt 419 zur Ausgabe des Adressenlesesignals AR verzweigt. Anderenfalls wird auf den Schritt 420 verzweigt, um zum negativen Zahlenwert einen Zahlenwert 512 hinzu zu addieren. Nach den Schritten 419 und 420 werden die Schritte 425,426 und 427 durchlaufen.
Im Schritt 425 wird der Zahlenwert für den Zähler der Primitivadresse AP ausgegeben. Dann wird im Schritt 426 ein Schreibsignal WR für den Eintrag des binaren Pixeldatums in ein Sammelregister abgegeben. Im Schritt 427 wird der Zahlenwert für den Zähler der Primitivadresse AP um den Wert Eins inkrementiert. Dann ist ein vierter Abfrageschritt 428 erreicht und es wird festgestellt, dass der Zahlenwert P des Zählers der Primitivadresse AP den Grenzwert 15 noch nicht erreicht hat. Anschließend wird auf den ersten Abfrageschritt 403 zurückverzweigt.
Im ersten Abfrageschritt 403 wird nun festgestellt, dass der Zahlenwert P des Zählers der Primitivadresse nicht gleich dem Wert Eins ist und zum fünften Abfrageschritt 407 verzweigt. Wenn der der Zahlenwert P ungerade ist, dann wird zum sechsten Abfrageschritt 408 verzweigt, in welchem geprüft wird, ob der Zähler der Adressengruppe den Wert 8 oder 15 hat. Ist das der Fall, dann wird auf einen Schritt 409 verzweigt und zum Zahlenwert C des Zählers des Adressenlesesignals AR wird der Zahlenwert 3 hinzuaddiert. Anderfalls wird vom sechsten Abfrageschritt 408 auf einen Schritt 410 verzweigt und zum Zahlenwert C des Zählers des Adressenlesesignals AR wird der Zahlenwert 47 hinzuaddiert.
Wenn aber der Zahlenwert P gerade ist, dann wird vom fünften Abfrageschritt 407 zum siebenten Abfrageschritt 415 verzweigt, in welchem geprüft wird, ob der Zähler der Adressengruppe den Wert 8 oder 15 hat. Ist das der Fall, dann wird auf einen Schritt 416 verzweigt und zum Zahlenwert C des Zählers des Adressenlesesignals AR wird der Zahlenwert 41 hinzuaddiert. Anderfalls wird vom siebenten Abfrageschritt 415 auf einen Schritt 417 verzweigt und zum Zahlenwert C des Zählers des Adressenlesesignals AR wird der Zahlenwert 3 subtrahiert.
Von den vorgenannten Schritten 405, 406, 409, 410, 416 und 417 ausgehend wird der dritte Abfrageschritt 418 wiedererreicht und festgestellt, ob der Zahlenwert C des Zählers des Adressenlesesignals AR größer/gleich dem Wert Null ist. Nach den Schritten 419 und 420 werden wieder die Schritte 425, 426 und 427 durchlaufen bis der vierte Abfrageschritt 428 erreicht wird, in welchem festgestellt wird, ob der Zahlenwert P des Zählers der Primitivadresse AP den Grenzwert 15 schon erreicht hat. Ist das der Fall, dann wird auf einen Schritt 429 verzweigt und ein Ladesignal zum Laden des Schieberegisters abgegeben. Um die Pixeldaten auszudrucken wird im Schritt 430 eine Subroutine 500 gestartet, in welcher u.a. ein Schiebetaktsignal SCL an das Schieberegister angelegt wird, um von letzterem seriell die Pixeldaten auszugeben. Anschließend wird im Schritt 431 der Wert des Zählers der Adressengruppe um den Wert Eins inkrementiert. Dann wird ein achter Abfrageschritt 432 erreicht, in welchem festgestellt wird, ob der Zahlenwert A des Zählers der Adressengruppe den Grenzwert 23 schon erreicht hat. Ist das der nicht Fall, dann wird auf den ersten Abfrageschritt 403 zurückverzweigt. Ist aber der Grenzwert 23 schon erreicht, dann wird die Subroutine 400 im Schritt 434 gestoppt.

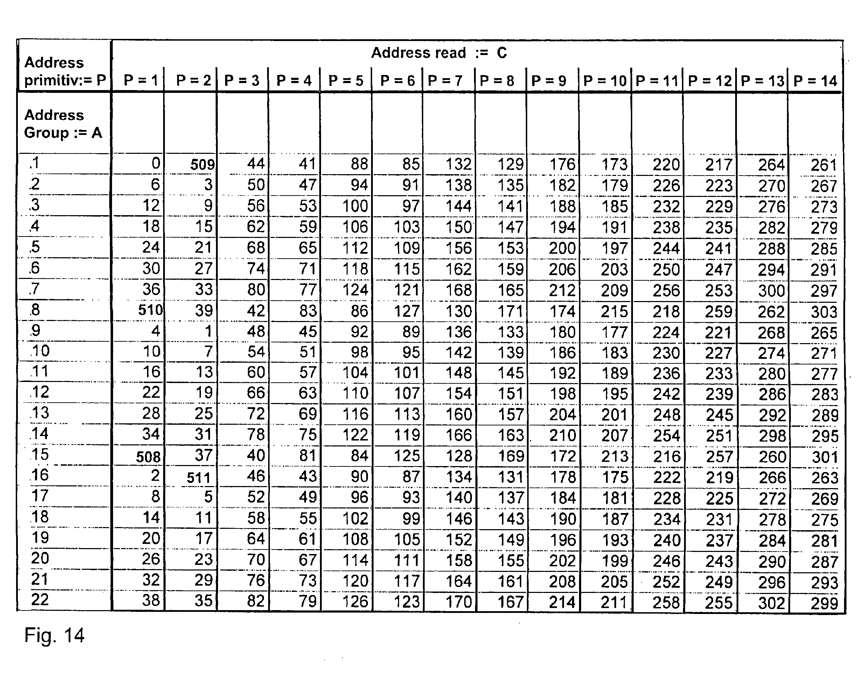

In der Figur 14 ist eine Tabelle zur Adressengenerierung durch die vorgenannte Routine 400 dargestellt. Durch den Adressengenerator 44 werden in der Praxis die Adressenwerte vorzugsweise als Binärzahl erzeugt und an die Pixeldatenaufbereitungseinheiten 41, 42 angelegt. Eine Binärzahl kann bekanntlich beispielweise als Hexadezimalzahl oder Dezimalzahl dargestellt werden, wodurch die Darstellung weniger Platz benötigt. Nur deshalb und zum besseren Verständnis sind in der Tabelle Dezimalzahlen eingetragen. Die Routine 400 erzeugt zunächst eine Primitivadresse P := 1 und eine Binärzahl Null als Adressenlesesignal AR für eine erste Adressgruppe A := 1. Dann wird nach einander bis zur Primitivadresse P := 14 eine entsprechende Binärzahl als Adressenlesesignal AR für die erste Adressgruppe A := 1 generiert. Das Adressenlesesignal AR (Address read) wird also für 14 Binärzahlen je Adressengruppe erzeugt. Nacheinander werden so entsprechende Binärzahlen als Adressenlesesignal AR für 22 Adressengruppen erzeugt. Durch ein jedes Adressenlesesignal AR wird im Zwischenspeicher auf ein binäres Pixeldatum zugegriffen.
Die Treibereinheiten 11 und 12 ignorieren die binäre Pixeldaten, die bei Adressenwerten A = 1 mit P = 2, A = 7 mit P = 13, A = 8 mit P = 1 und mit P = 14, A = 15 mit P = 1 und mit P = 14, A = 16 mit P = 2 sowie die bei A = 22 mit P = 14 gelesen werden. Die Adressenwerte größer als 500 müssen als Binärzahl deshalb nicht vollständig erzeugbar sein. Zum Bereitstellen von binären Pixeldaten werden alle Adressenwerte größer als 299 zwar erzeugt, aber ebenfalls nicht beim Drucken benötigt.
Die Routine 400 wird solange ausgeführt bis alle Druckbildspalten gedruckt worden sind. In Zusammenhang mit den Figuren 9a, 9b und 10b ist bereits erläutert worden, dass zum Drucken von Druckbildspalten die Düsenreihen eines Druckkopfes abwechselnd aktiv werden. Während einer der Zwischenspeicher per direktem Speicherzugriff mit binären Pixeldaten geladen wird, wird der andere Zwischenspeicher ausgelesen, um aufbereitete Gruppen von binären Pixeldaten zu den Treibereinheiten zu übertragen. Das wechselseitige Wiederholen der Routine 400 und weitere anschließende Schritte werden von der Druckersteuerung 45 ausgeführt, welche gesteuert von einem Signal e eines Encoders 3, auch die Drucksignale Print 1 bzw. Print 2 generiert.

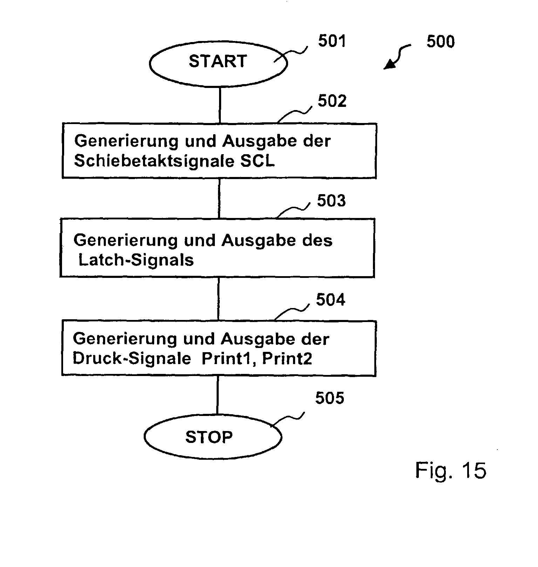

In der Figur 15 ist ein Flußplan der Druckroutine 500 dargestellt. Letztere wird als Subroutine im Verlauf der Subroutine 400 aufgerufen, um die Schieberegister in der Druckdatensteuerung 41, 42 und um die Treibereinheiten (Pen Driver Boards) 11, 12 anzusteuern. Nach dem Start im Schritt 501 wird ein Schritt 502 erreicht und ein Schietakt SCL generiert, um via der seriellen Datenausgabe aus dem Schieberegister die in letzterem geladenen Pixeldaten zur jeweiligen die Treibereinheit 11, 12 weiterzuschieben. Anschließend wird im Schritt 503 ein Latch-Signal generiert und an die Treibereinheiten (Pen Driver Boards) 11, 12 ausgegeben. Dann werden im Schritt 504 die Druck-Signale Print1, Print2 generiert und an die Treibereinheiten (Pen Driver Boards) 11, 12 ausgegeben und im Schritt 505 wird die Subroutine 500 gestoppt.

In einer Ausführungvariante mit nur einem einzigen Druckkopf ist natürlich nur eine einzige Pixeldatenaufbereitungseinheit 42 und die spezielle Steuerung 43, 44 und 45 erforderlich. Für den Fall, dass der Druckkopf nur mit einer einzigen Düsenreihe zum Drucken einer Druckbildspalte ausgestattet ist, stimmt die Reihenfolge der binären Pixeldaten im Datenstring mit der Reihenfolge der Pixel in der Druckbildspalte überein. Folglich wird die Reihenfolge der binären Pixeldaten dann dem Druckkopftyp entsprechend sogar druckbildspaltenweise während des Druckens geändert.

Die Erfindung ist sowohl für einen einzigen Druckkopf mit einer oder mehreren Düsenreihen mit orthogonaler Ausrichtung zur Transportrichtung als auch mehrerer solcher Druckköpfe anwendbar. Bei einer Verwendung von Druckköpfen, die eine andere Reihenfolge an gelieferten binären Pixeldaten benötigen, insbesonderer von Druckköpfen anderer Hersteller sind der in der Figur 11 gezeigte Flußplan und die zugehörige Tabelle sind natürlich nur in entsprechend modifizierter Form einsetzbar. Entsprechend der in der Erfindung beschriebenen Art wird datenstringweise die Reihenfolge der binären Pixeldaten dem Druckkopftyp entsprechend während des Druckens geändert.

Von allen Ausführungsformen unabhängig kann in vorteilhafter Weise die Anordnung von binären Pixeldaten im Pixelspeicher RAM 7 so organisiert werden, dass eine Änderung von Bildelementen leicht bzw. unaufwendig möglich ist. Die Druckdatensteuerung zur Pixeldatenaufbereitung während des Druckens mit einem Druckkopf ermöglicht somit auch eine höhere Flexibilität hinsichtlich der Anforderungen unterschiedlicher nationaler Postbehörden an ein druckendes Postverarbeitungsgerät.

Die Erfindung ist nicht auf die vorliegenden Ausführungsform beschränkt. So können offensichtlich weitere andere Ausführungen der Erfindung entwickelt bzw. eingesetzt werden, die von den anliegenden Ansprüchen umfaßt werden.

## Patentansprüche

1. Anordnung zum Steuern des Druckens auf ein bewegtes Postgut in einem Postverarbeitungsgerät, mit mindestens einem Druckkopf (1, 2), der über jeweils eine Treibereinheit (11, 12) von einer Druckdatensteuerung (4) ansteuerbar ist, die mit einem Encoder (3) und über einen Bus (5) mit mindestens einem Mikroprozessor (6), einem Pixelspeicher (7), einem nichtflüchtigen Speicher (8) und einem Festwertspeicher (9) adress-, daten- und steuerungsmäßig verbunden ist, **gekennzeichnet dadurch, dass** die Druckdatensteuerung (4) mindestens eine mit dem Pixelspeicher (7) datenbusmäßig verbundene Einheit (41, 42) zur Pixeldatenaufbereitung während des Druckens mit dem mindestens einen Druckkopf, eine DMA-Steuerung (43), einen Adressengenerator (44) und eine Druckersteuerung (45) aufweist, wobei Datenworte mit binären Pixeldaten im Pixelspeicher (7) gespeichert sind, wobei jeweils eine vorbestimmte Anzahl an aufeinanderfolgenden Datenworten einen Datenstring bildet, dass die mindestens eine Pixeldatenaufbereitungseinheit (41, 42) zwei Zwischenspeicher (411 und 412, 421 und 422) je Druckkopf (1, 2) aufweist, dass die DMA-Steuerung (43) und der Adressengenerator (44) mit der mindestens einen Pixeldatenaufbereitungseinheit (41, 42) steuerungsmäßig verbunden sind, um abwechselnd einen nachfolgenden Datenstring zwischenzuspeichern und um während des Druckens die zwischengespeicherten binären Pixeldaten zur Pixeldatenaufbereitung zur Verfügung zu stellen und dass die Druckersteuerung (45) mit der DMA-Steuerung (43), mit dem Adressengenerator (44) und mit der Pixeldatenaufbereitungseinheit (41, 42) steuerungsmäßig verbunden ist.

2. Anordnung, nach Anspruch 1, **gekennzeichnet dadurch, dass** der Adressengenerator (44) Mittel zur Generierung und Ausgabe von Adressensignalen (AR, AP) und von Steuersignalen (WR, LD) aufweist, und wobei die Adressensignale (AR, AP) und Steuersignale (WR, LD) der Pixeldatenaufbereitungseinheit (41, 42) zur Auswahl der zwischengespeicherten binären Pixeldaten und deren Gruppierung in einer vorbestimmten Reihenfolge zugeführt werden.

3. Anordnung, nach Anspruch 1, **gekennzeichnet dadurch, dass** die DMA-Steuerung (43) mit dem Mikroprozessor (6) und den Zwischenspeichern (411 und 412, 421 und 422) steuerungsmäßig verbunden ist, dass die DMA-Steuerung (43) Mittel zur Generierung und Ausgabe von Adressenschreibsignalen (AW) aufweist, die bei einem Zugriff auf die im Pixelspeicher (7) gespeicherten binären Pixeldaten deren Einschreiben in die Zwischenspeicher (411, 412, 421, 422) der Pixeldatenaufbereitungseinheit (41, 42) gestatten sowie dass die DMA-Steuerung (43) einen Zyklenzähler für eine vorbestimmte Anzahl an Datenworten aufweist.

4. Anordnung, nach Anspruch 1, **gekennzeichnet dadurch, dass** die Druckersteuerung (45) Mittel zur Generierung und Ausgabe eines Umschaltsignals (SO) aufweist, um damit die Pixeldatenaufbereitungseinheit (41, 42) anzusteuern, wodurch die Pixeldaten von dem jeweils ersten oder dem jeweils zweiten der beiden Zwischenspeicher (411 und 421 oder 412 und 422) für eine Übertragung zu der Treibereinheit (11, 12) ausgewählt werden sowie
dass die Druckersteuerung (45) mit der DMA-Steuerung (43) über eine Steuerleitung für das Umschaltsignal (SO) verbunden ist und dass die DMA-Steuerung (43) Mittel zur Generierung und Ausgabe von Auswahlsignalen (Sel_1.1, Sel_1.2, Sel_2.1, Sel_2.2) in Abhängigkeit vom Schaltzustand des Umschaltsignals (SO) aufweist, um die binären Pixeldaten in den jeweils ersten oder den jeweils zweiten der beiden Zwischenspeicher (411 und 421 oder 412 und 422) zwischenzuspeichern, wobei bei einer Übertragung von Pixeldaten aus dem jeweils einen der beiden Zwischenspeicher zu der Treibereinheit (11, 12), die jeweils anderen Zwischenspeicher zum Zwischenspeichern eines Datenstrings nacheinander durch die Auswahlsignale ausgewählt werden.

5. Anordnung, nach den Ansprüchen 1 und 3, **gekennzeichnet dadurch, dass** der Zyklenzähler der DMA-Steuerung (43) ein Wortzähler für eine vorbestimmte Anzahl an 16 Bit-Datenworten ist, der durch ein DMA-start-Signal gestartet wird, dass die Mittel zur Generierung und Ausgabe von Auswahlsignalen der DMA-Steuerung (43) mindestens ein Ausgabemittel und ein erstes und zweites Vergleichsmittel aufweisen, wobei das erste Vergleichsmittel in Abhängigkeit vom SO-Signal mindestens ein Ausgabemittel ansteuert, um bis zum Erreichen einer ersten vorbestimmten Anzahl an 16 Bit-Datenworten ein für die erste Pixeldatenaufbereitungseinheit 41 bestimmtes Auswahlsignal (Sel_1 ,1 oder Sel_1.2) und um nach dem Erreichen der ersten vorbestimmten Anzahl an 16 Bit-Datenworten ein für die zweite Pixeldatenaufbereitungseinheit 42 bestimmtes Auswahlsignal (Sel_2.1 oder Sel_2.2) auszugeben und wobei das zweite Vergleichsmittel nach dem Erreichen einer zweiten vorbestimmten Anzahl an 16 Bit-Datenworten ein DMA-busy-Signal mit dem Wert 'Null' erzeugt und mit einer Steuerleitung verbunden ist, die am Zyklenzähler anliegt, um das Zählen von DMA-Zyklen zu beenden.

6. Anordnung, nach den Ansprüchen 1, 3, 4 und 5, **gekennzeichnet dadurch, dass** die Pixeldatenaufbereitungseinheit (41, 42) Zwischenspeicher (421, 422 bzw. 411, 412), einen Selektor (423 bzw. 413) zur Auswahl der binären Pixeldaten und ein Schieberegister (414 bzw. 424) zur Parallel/Serienwandlung der in einer neuen Reihenfolge bereitgestellten binären Pixeldaten enthält, wobei vom Adressengenerator (44) die generierten Adressenlesesignale (AR) den Zwischenspeichern (421, 422 bzw. 411, 412) und dem Selektor (423 bzw. 413) der Pixeldatenaufbereitungseinheit (41, 42) und wobei die Primitiv-Adressensignale (AP) und das Schreibsteuersignal (WR) dem Selektor (423 bzw. 413) und ein Ladesignal (LD) dem Schieberegister (414 bzw. 424) zugeführt werden, sowie wobei von der Druckersteuerung (45) das Umschaltsignal (SO) dem Selektor (423 bzw. 413) zugeführt wird.

7. Anordnung, nach Anspruch 6, **gekennzeichnet dadurch, dass** zur wortweisen Adressierung die höherwertigen Bits des Adressenlesesignals (AR) an einem separaten Adresseneingang des ersten und zweiten Zwischenspeichers (411, 412 bzw. 421, 422) anliegen und die vier niederwertigen Bits des Adressenlesesignals (AR) an einem Adresseneingang des Selektors (423, 413) anliegen, um eine Adressierung innerhalb eines Datenwortes zu erlauben.

8. Anordnung, nach Anspruch 1, **gekennzeichnet dadurch, dass** die Druckersteuerung (45) über eine Steuerleitung für ein Interruptsignal (I) und über den BUS (5) mit dem Mikroprozessor (6) verbunden ist und dass die Druckersteuerung (45) einen Datenstringzähler aufweist und mit dem Encoder (3) verbunden ist, wobei nach jedem gedruckten Datenstring der Wert (V) des Datenstringzählers bei Auftreten des Encodertaktes inkrementiert wird und wobei das Drucken eines Druckbildes beendet wird, wenn ein vorgegebener Wert (U) des Datenstringzählers erreicht ist.

9. Anordnung, nach Anspruch 1, **gekennzeichnet dadurch, dass** die Druckersteuerung (45) mit der DMA-Steuerung (43) direkt über Steuerleitungen für erste DMA-Steuersignale (DMA-Start und DMA-busy) verbunden ist, wobei der DMA-Steuerung (43) von der Druckersteuerung (45) das DMA-Startsignal zugeführt wird und wobei die DMA-Steuerung (43) das DMA-busy-Signal mit dem Wert 'Null' an die Druckersteuerung (45) abgibt, um zu signalisieren, daß der direkte Speicherzugriff erfolgt ist und dass die Druckersteuerung (45) mit dem Adressengenerator (44) über eine Steuerleitung zur Zuführung eines Adressengeneratorstartsignals verbunden ist.

10. Anordnung, nach den Ansprüchen 1 und 3, **gekennzeichnet dadurch, dass** die DMA-Steuerung (43) mit dem Mikroprozessor (6) über Steuerleitungen für zweite DMA-Steuersignale (DMA_{ACK}, DMA_{REQ}) verbunden ist.

11. Anordnung, nach Anspruch 1, **gekennzeichnet dadurch, dass** die Zwischenspeicher (421, 422 bzw. 411, 412) als Dual-Port-RAMs realisiert sind.

12. Anordnung, nach den Ansprüchen 1 bis 11, **gekennzeichnet dadurch, dass** den Zwischenspeichern (411, 412 bzw. 421, 422) ein Selektor (413 bzw. 423) nachgeschaltet ist, welcher einen ersten Multiplexers (4131 bzw. 4231) aufweist, welcher ein einzelnes Bit der binären Pixeldaten auswählt, wenn an seinem Adresseneingang (4130 bzw. 4230) der niederwertige Teil des Adressenlesesignals (AR) anliegt, wobei der dem ersten Dualport-RAM (4110 bzw. 4210) nachgeschaltete erste Multiplexer (4131 bzw. 4231) ausgangsseitig mit einem ersten Dateneingang eines dritten Multiplexers (4133 bzw. 4233) und wobei ein dem zweiten Dualport-RAM (4120 bzw. 4220) nachgeschalteter zweiter Multiplexer (4132 bzw. 4232) ausgangsseitig mit einem zweiten Dateneingang des dritten Multiplexers (4133 bzw. 4233) verbunden ist, dass ein Umschaltsignal (SO) am Steuereingang des dritten Multiplexers (4133 bzw. 4233) anliegt, so dass das vorgenannte einzelne Bit der binären Pixeldaten ausgegeben wird und am Dateneingang eines nachgeschalteten Demultiplexers (4134 bzw. 4234) anliegt, dass dem Demultiplexer (4134 bzw. 4234) ein rücksetzbares Sammelregister (4135 bzw. 4235) für binäre Pixeldaten nachgeschaltet ist, welches einen 14-Bit parallelen Datenausgang aufweist, wobei das vorgenannte einzelne Bit der binären Pixeldaten in das Sammelregister (4135 bzw. 4235) übernommen wird, wenn ein Schreibsignal (WR) an einem Steuereingang des Sammelregisters (4135 bzw. 4235) angelegt wird, dass dem Demultiplexer (4134 bzw. 4234) eine primitive Adresse (AP) zugeführt wird, welche den Speicherplatz des Bits im Sammelregister (4135 bzw. 4235) einstellt.

13. Anordnung, nach den Ansprüchen 6 und 12, **gekennzeichnet dadurch, dass** dem Ausgang des Sammelregisters (4135 bzw. 4235) das Schieberegister (414 bzw. 424) nachgeschaltet ist.

14. Anordnung, nach den Ansprüchen 1 bis 13, **gekennzeichnet dadurch, dass** die Druckdatensteuerung (4) als anwendungsspezifische Schaltung bzw. programmierbare Logik realisiert wird.

## Claims

1. An arrangement for controlling the printing on a moving postal item in a postal-item processing apparatus, having at least one print head (1, 2) controllable via one driver unit (11, 12) each by a print data control unit (4) that is connected with an encoder (3) and connected in terms of address, data and control via a bus (5), with at least one microprocessor (6), a pixel memory (7), a non-volatile memory (8) and a read-only memory (9),
**characterized in that** the print data control unit (4) has at least one unit (41, 42) connected with the pixel memory (7) by data bus for pixel data preparation during the printing with the at least one print head, a DMA control (43), an address generator (44) and a printer control (45), wherein data words with binary pixel data are stored in the pixel memory (7), wherein a pre-defined number of successive data words forms a data string each, that the at least one pixel data preparation unit (41, 42) has two intermediate memories (411 and 412, 421 and 422) per print head (1, 2), that the DMA control (43) and the address generator (44) are connected in terms of control with the at least one pixel data preparation unit (41, 42) for alternatingly intermediately storing a subsequent data string and making available the intermediately stored binary pixel data for pixel data preparation during the printing, and that the printer control (45) is connected in terms of control with the DMA control (43), with the address generator (44) and with the pixel data preparation unit (41, 42).

2. An arrangement according to Claim 1, **characterized in that** the address generator (44) is provided with means for the generation and output of address signals (AR, AP) and of control signals (WR, LD), and wherein the address signals (AR, AP) and control signals (WR, LD) of the pixel data preparation unit (41, 42) are supplied for selecting the intermediately stored binary pixel data and grouping them in a pre-defined order.

3. An arrangement according to Claim 1, **characterized in that** the DMA control (43) is connected in terms of control with the microprocessor (6) and the intermediate memories (411 and 412, 421 and 422), that the DMA control (43) has means for the generation and output of address writing signals (AW) that, upon access to the binary pixel data stored in pixel memory (7), allow their writing into the intermediate memories (411, 412, 421, 422) of the pixel data preparation unit (41, 42), and that the DMA control (43) has a cycle counter for a pre-defined number of data words.

4. An arrangement according to Claim 1, **characterized in that** the printer control (45) has means for the generation and output of a switchover signal (SO) for triggering the pixel data preparation unit (41, 42) whereby the pixel data are selected from the respective first or the respective second of the two intermediate memories (411 and 412, 421 and 422) for transmission to the driver unit (11,12), as well as
that the printer control (45) is connected with the DMA control (43) via a control line for the switchover signal (SO), and that the DMA control (43) has means for the generation and output of selection signals (Sel_1.1, Sel_1.2, Sel_2.1, Sel_2.2), depending of the switching status of the switchover signal (SO), for intermediately storing the binary pixel data into the respective first or the respective second of the two intermediate memories (411 and 412, 421 and 422), wherein, in a transmission of pixel data from the respective one of the two intermediate memories to the driver unit (11, 12), the respective other intermediate memories are successively selected by the selection signals for the intermediate storage of a data string.

5. An arrangement according to Claims 1 and 3, **characterized in that** the cycle counter of the DMA control (43) is a word counter for a pre-defined number of 16-bit data words that is started by a DMA-start signal, that the means for the generation and output of selection signals of the DMA control (43) include at least an output means and a first and a second comparator means, wherein the first comparator means, depending on the SO signal, triggers at least one output means in order to output, until reaching a first pre-defined number of 16-bit data words, a selection signal (Sel_1.1 or Sel_1.2) destined for the first pixel data preparation unit 41 and to output, after reaching the first pre-defined number of 16-bit data words, a selection signal (Sel_2.1 or Sel_2.2) destined for the second pixel data preparation unit 42, and wherein, after reaching a second pre-defined number of 16-bit data words, the second comparator means generates a DMA-busy signal with the value 'zero' and is connected to a control line to the cycle counter in order to terminate the counting of DMA cycles.

6. An arrangement according to Claims 1, 3, 4 and 5, **characterized in that** the pixel data preparation unit (41, 42) comprises intermediate memories (421, 422 or 411, 412), a selector (423 or 413) for selecting the binary pixel data and a shift register (414 or 424) for parallel/serial conversion of the binary pixel data provided in a new order, wherein the address generator (44) supplies the generated address reading signals (AT) to the intermediate memories (421, 422 or 411, 412) and to the selector (423 or 413) of the pixel data preparation unit (41, 42) and wherein the primitive address signals (AP) and the writing control signal (WR) are supplied to the selector (423 or 413) and a loading signal (LD) is supplied to the shift register (414 or 424), and wherein the printer control (45) supplies the switchover signal (SO) to the selector (423 or 413).

7. An arrangement according to Claim 6, **characterized in that**, for word-by-word addressing, the higher-value bits of the address reading signal (AR) are applied to a separate address input of the first and second intermediate memories (411, 412 or 421, 422) and the four lower-value bits of the address reading signal (AR) are applied to an address input of the selector (423 or 413) so as to allow addressing within a data word.

8. An arrangement according to Claim 1, **characterized in that** the printer control (45) is connected via a control line for an interrupt signal (I) and via the BUS (5) with the microprocessor (6), and that the printer control (45) has a data string counter and is connected with the encoder (3), wherein, after every printed data string, the value (V) of the data string counter is incremented when the encoder cycle pulse occurs, and wherein the printing of a print image is concluded when a pre-defined value (U) of the data string counter has been reached.

9. An arrangement according to Claim 1, **characterized in that** the printer control (45) is directly connected with the DMA control (43) via control lines for first DMA control signals (DMA-start and DMA-busy), wherein the DMA start signal is supplied by the printer control (45) to the DMA control (43), and wherein the DMA control (43) sends the DMA-busy signal with the value "zero" to the printer control (45) in order to signalize that the direct memory access has occurred and that the printer control (45) is connected with the address generator (44) via a control line for supplying an address generator start signal.

10. An arrangement according to Claims 1 and 3, **characterized in that** the DMA control (43) is connected with the microprocessor (6) via control lines for second DMA control signals (DMA_{ACK}, DMA_{REQ}).

11. An arrangement according to Claim 1, **characterized in that** the intermediate memories (421, 422 or 411, 412) are designed as dual-port RAMS.

12. An arrangement according to Claims 1 to 11, **characterized in that**, downstream the intermediate memories (411, 412 or 421, 422), there is arranged a selector (413 or 423) having a first multiplexer (4131 or 4231) that selects an individual bit of the binary pixel data when the lower-value part of the address reading signal (AR) is applied to its address input (4130 or 4230), wherein the first multiplexer (4131 or 4231) arranged downstream the first dual-port RAM (4110 or 4210) is connected, on its output side, with a first data input of the third multiplexer (4133 or 4233), and wherein a second multiplexer (4132 or 4232) arranged downstream the second dual-port RAM (4120 or 4220) is connected, on its output side, with a second data input of the third multiplexer (4133 or 4233), that a switchover signal (SO) is applied to the control input of the third multiplexer (4133 or 4233) so that the above-mentioned single bit of the binary pixel data is output and applied to the data input of a demultiplexer (4134 of 4234) arranged downstream, that, downstream the demultiplexer (4134 of 4234), there is provided a resettable collector register (4135 or 4235) for binary pixel data that has a parallel 14-bit data output, wherein the above-mentioned single bit of the binary pixel data is taken over into the collector register (4135 or 4235) when a writing signal (WR) is applied to a control input of the collector register (4135 or 4235), and that a primitive address (AP) setting the storage location of the bit in the collector register (4135 or 4235) is supplied to the demultiplexer (4134 of 4234).

13. An arrangement according to Claims 6 and 12, **characterized in that** the shift register (414 or 424) is arranged downstream the output of the collector register (4135 or 4235).

14. An arrangement according to Claims 1 to 13, **characterized in that** the print data control unit (4) is designed as a user-specific circuit or programmable logic.

## Revendications

1. Dispositif destiné à commander l'impression sur un article postal en mouvement dans un appareil de traitement de courrier, comportant au moins une tête d'imprimante (1, 2) qui est à chaque fois commandable par l'intermédiaire d'une unité de pilotage (11, 12) à partir d'une commande de données d'impression (4), ladite commande étant reliée avec un encodeur (3) et, par l'intermédiaire d'un BUS (5), à au moins un microprocesseur (6), à une mémoire de pixels (7), à une mémoire non volatile (8) et à une mémoire permanente (9) en matière d'adresses, de données et de commande, **caractérisé en ce que** la commande de données d'impression (4) comporte au moins une unité (41, 42) reliée en matière de bus de données avec la mémoire de pixels (7), pour la préparation des données de pixels pendant l'impression avec au moins ladite tête d'imprimante, un contrôleur DMA (43), un générateur d'adresses (44) et une commande d'imprimante (45), et dont des mots de données sont enregistrés avec des données de pixels binaires dans la mémoire de pixels (7), et dont à chaque fois un nombre prédéfini de mots de données successifs forme une chaîne de données, et que ladite au moins une unité de préparation des données de pixels (41, 42) comporte deux mémoires intermédiaires (411 et 412, 421 et 422) pour chaque tête d'imprimante (1, 2), et que le contrôleur DMA (43) et le générateur d'adresses (44) sont reliés en matière de commande à ladite au moins une unité de préparation des données de pixels (41, 42), pour sauvegarder temporairement et alternativement une chaîne de données qui suit et pour mettre à disposition les données de pixels binaires sauvegardées temporairement pendant l'impression, et que la commande d'imprimante (45) soit reliée en matière de commande au contrôleur DMA (43), au générateur d'adresses (44) et à l'unité de préparation des données de pixels (41, 42).

2. Dispositif selon la revendication 1, **caractérisé en ce que** le générateur d'adresses (44) comporte un moyen de génération et d'émission de signaux d'adresses (AR, AP) et de signaux de commande (WR, LD), et que les signaux d'adresses (AR, AP) et les signaux de commande (WR, LD) soient transmis à l'unité de préparation des données de pixels (41, 42) pour sélectionner les données de pixels binaires sauvegardées temporairement et pour les grouper en ordre prédéfini.

3. Dispositif selon la revendication 1, **caractérisé en ce que** le contrôleur DMA (43) soit relié en matière de commande au microprocesseur (6) et aux mémoires intermédiaires (411 et 412, 421 et 422), que le contrôleur DMA (43) soit doté de moyens pour la génération et l'émission de signaux d'écriture d'adresses (AW), qui, lors d'un accès aux données de pixels binaires enregistrées dans la mémoire de pixels (7), autorisent leur inscription dans les mémoires intermédiaires (411, 412, 421, 422) de l'unité de préparation des données de pixels (41, 42) et que le contrôleur DMA (43) soit doté d'un compteur de cycles pour un nombre prédéfini de mots de données.

4. Dispositif selon la revendication 1, **caractérisé en ce que** la commande d'imprimante (45) soit dotée de moyens pour la génération et l'émission d'un signal de commutation (SO) servant à lancer la commande de l'unité de préparation des données de pixels (41, 42), laquelle a pour effet de sélectionner les données de pixels de la première mémoire intermédiaire respective ou de la deuxième mémoire intermédiaire respective des deux mémoires intermédiaires (411 et 421 ou 412 et 422) pour les transmettre à l'unité de pilotage (11, 12) ainsi que la commande d'imprimante (45) soit reliée au contrôleur DMA (43) par l'intermédiaire d'une ligne de commande pour le signal de commutation (SO) et que le contrôleur DMA (43) soit doté de moyens destinés à la génération et à l'émission de signaux de sélection (Sel_1.1, Sel_1.2, Sel_2.1, Sel_2.2) en dépendance de l'état de commutation du signal de commutation (SO) pour sauvegarder temporairement les données de pixels binaires respectivement dans la première ou dans la deuxième des deux mémoires intermédiaires (411 et 421 ou 412 et 422), et que lorsque des données de pixels sont transmises respectivement d'une des deux mémoires intermédiaires à l'unité de pilotage (11, 12), les autres mémoires intermédiaires respectives soient sélectionnées l'une après l'autre par les signaux de sélection pour la sauvegarde temporaire d'une chaîne de données.

5. Dispositif selon les revendications 1 et 3, **caractérisé en ce que** le compteur de cycles du contrôleur DMA (43) soit un compteur de mots destiné à un nombre prédéterminé de mots de données de 16 bits, ledit compteur étant démarré par un signal de départ DMA, et que les moyens destinés à la génération et à l'émission de signaux de sélection du contrôleur DMA (43) soient au moins dotés d'un moyen d'émission et d'un premier et deuxième moyen de comparaison, et dont le premier moyen de comparaison commande au moins un moyen d'émission en dépendance du signal SO, pour émettre, jusqu'à l'atteinte d'un premier nombre prédéfini de mots de données de 16 bits, un signal de sélection (Sel_1.1 ou Sel_1.2) destiné à la première unité de préparation des données de pixels (41) et pour émettre, après l'atteinte du premier nombre prédéfini de mots de données de 16 bits, un signal de sélection (Sel_2.1 ou Sel_2.2) destiné à la deuxième unité de préparation des données de pixels (42), et dont le deuxième moyen de comparaison produit, après l'atteinte d'un deuxième nombre prédéfini de mots de données de 16 bits, un signal d'occupation DMA ayant la valeur 'Zéro', ledit deuxième moyen de comparaison étant relié à une ligne de commande desservant le compteur de cycles afin d'arrêter le comptage des cycles DMA.

6. Dispositif selon les revendications 1, 3, 4 et 5, **caractérisé en ce que** l'unité de préparation des données de pixels (41, 42) comprend des mémoires intermédiaires (421, 422 ou encore 411, 412), un sélecteur (423 ou encore 413) pour la sélection des données de pixels binaires et un registre à décalage (414 ou encore 424) pour la conversion en parallèle/série des données de pixels binaires mises à disposition, et dont les signaux de lecture d'adresses (AR) générés sont transmis aux mémoires intermédiaires (421, 422 ou encore 411, 412) et au sélecteur (423 ou encore 413) de l'unité de préparation des données de pixels (41, 42) par le générateur d'adresses (44), et dont sont transmis les signaux d'adresses primitifs (AP) et le signal de commande d'écriture (WR) au sélecteur (423 ou encore 413) et un signal de charge (LD) au registre à décalage (414 ou encore 424), ainsi que soit transmis par la commande d'imprimante (45) le signal de commutation (SO) au sélecteur (423 ou encore 413).

7. Dispositif selon la revendication 6, **caractérisé en ce que** les bits les plus significatifs du signal de lecture d'adresses (AR) pour l'adressage mot à mot soient présents à une entrée d'adresses séparée de la première et de la deuxième mémoire intermédiaire (411, 412 ou encore 421, 422) et que les quatre bits moins significatifs du signal de lecture d'adresses (AR) soient présents à une entrée d'adresses du sélecteur (423, 413), pour autoriser un adressage au sein d'un mot de données.

8. Dispositif selon la revendication 1, **caractérisé en ce que** la commande d'imprimante (45) soit reliée par l'intermédiaire d'une ligne de commande pour un signal d'interruption (I) et par le BUS (5) au microprocesseur (6) et que la commande d'imprimante (45) comporte un compteur de chaînes de données en étant reliée à l'encodeur (3), et dont la valeur (V) du compteur de chaînes de données soit incrémentée lors de l'intervention du cycle de l'encodeur et dont l'impression d'une présentation d'impression sera terminée, si une valeur (U) prédéfinie du compteur de chaînes de données est atteinte.

9. Dispositif selon la revendication 1, **caractérisé en ce que** la commande d'imprimante (45) est reliée directement au contrôleur DMA (43) par l'intermédiaire de lignes de commande pour des premiers signaux de commande DMA (démarrage DMA et DMA occupé), et dont le signal de démarrage DMA soit transmis au contrôleur DMA (43) par la commande d'imprimante (45) et dont le contrôleur DMA (43) transmet le signal d'occupation DMA avec la valeur 'Zéro' à la commande d'imprimante (45), pour signaler que l'accès direct à la mémoire a eu lieu et que la commande d'imprimante (45) est reliée au générateur d'adresses (44) par l'intermédiaire d'une ligne de commande pour transmettre un signal de démarrage du générateur d'adresses.

10. Dispositif selon les revendications 1 et 3, **caractérisé en ce que** le contrôleur DMA (43) soit relié au microprocesseur (6) par l'intermédiaire de lignes de commande pour des seconds signaux de commande DMA (DMA_{ACK}, DMA_{REQ}).

11. Dispositif selon la revendication 1, **caractérisé en ce que** les mémoires intermédiaires (421, 422 ou encore 411, 412) sont réalisées en RAM Dual-Port.

12. Dispositif selon les revendications 1 à 11, **caractérisé en ce qu'**un sélecteur (413 ou encore 423) soit couplé en aval des mémoires intermédiaires (411, 412 ou encore 421, 422), ledit sélecteur comportant un premier multiplexeur (4131 ou encore 4231), lequel sélectionne un bit individuel des données de pixels binaires, si la partie d'ordre inférieur du signal de lecture d'adresses (AR) est placée sur son entrée d'adresses (4130 ou 4230), et dont le premier multiplexeur (4131 ou 4231) branché en aval de la première RAM Dual- Port (4110 ou 4210) est relié du côté de la sortie avec une première entrée de données d'un troisième multiplexeur (4133 ou 4233) et dont un deuxième multiplexeur (4132 ou 4232) branché en aval de la deuxième RAM Dual- Port (4120 ou 4220) est relié du côté de la sortie avec une deuxième entrée de données du troisième multiplexeur (4133 ou 4233), de sorte que le bit individuel précité des données de pixels binaires est émis et placé sur l'entrée des données d'un démultiplexeur (4134 ou 4234) branché en aval, et qu'un registre collecteur réinitialisable (4135 ou 4235) pour les données de pixels binaires est branché en aval du démultiplexeur (4134 ou 4234), ledit registre comportant une sortie de données parallèle de 14 bits, et dont le bit individuel précité des données de pixels binaires est enregistré dans le registre collecteur (4135 ou 4235), si un signal d'écriture (WR) est créé sur une entrée de commande du registre collecteur (4135 ou 4235), et que soit affectée au démultiplexeur (4134 ou 4234) une adresse primitive (AP), qui configure l'espace de mémoire du bit dans le registre collecteur (4135 ou 4235).

13. Dispositif selon les revendications 6 et 12, **caractérisé en ce que** le registre à décalage (414 ou 424) soit couplé en aval par rapport à la sortie du registre collecteur (4135 ou 4235).

14. Dispositif selon les revendications 1 à 13, **caractérisé en ce que** la commande de données d'impression (4) soit réalisée en tant que commutation à application spécifique ou encore comme logique programmable.
